# EUROPEAN PATENT APPLICATION

(11) **EP 4 033 758 A1**
(43) Date of publication of application: **27.07.2022**
(21) Application number: 20870894.1
(22) Date of filing: 28.09.2020
(51) Int. Cl.: H04N 13/383

(54) **METHOD AND APPARATUS FOR REALIZING 3D DISPLAY, AND 3D DISPLAY TERMINAL**

(30) Priority: 30.09.2019 CN 201910948119; 30.09.2019 CN 201910948117; 30.09.2019 CN 201910947079
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/118471
(87) International publication number: WO 2021/063321

(57) **Abstract**

The present application relates to the technical field of 3D. Disclosed is a method for realizing 3D display, comprising: acquiring an image having eye space information of a user; acquiring eye positions of the user according to the image having the eye space information of the user and by means of a displacement sensor that operates independently relative to a main control chip of a 3D display terminal; and generating 3D display content according to a to-be-displayed image and the eye positions of the user. According to the present application, the displacement sensor that operates independently relative to a main control chip of a 3D display terminal is used to directly process the acquired image having eye space information of a user, instead of processing the image by means of the main control chip of the 3D display terminal, so as to avoid occupancy of a large amount of resources of the main control chip caused by processing the image having the eye space information of the user, so that dependence on the main control chip is reduced, and the timeliness of image processing is improved. Further disclosed are an apparatus for realizing 3D display and a 3D display terminal.

## Description

The present application claims priority to the Chinese Patent Application with an application number of 201910948119.4 and a title of *"*Method and Apparatus for Realizing 3D Display, and 3D Display Terminal", filed to China National Intellectual Property Administration on September 30th, 2019, the disclosures of which are hereby incorporated by reference.

The present application claims priority to the Chinese Patent Application with an application number of 201910948117.5 and a title of *"*Method and Apparatus for Realizing 3D Shooting and Display, and 3D Display Terminal", filed to China National Intellectual Property Administration on September 30th, 2019, the disclosures of which are hereby incorporated by reference.

The present application claims priority to the Chinese Patent Application with an application number of 201910947079.1 and a title of *"*Method and Apparatus for Realizing 3D Display, and 3D Display Terminal", filed to China National Intellectual Property Administration on September 30th, 2019, the disclosures of which are hereby incorporated by reference.

### TECHNICAL FIELD

The present application relates to the technical field of 3D, for example, relates to a method and an apparatus for realizing 3D display, and a 3D display terminal.

### BACKGROUND

At present, an increasing number of terminals are provided with shooting apparatuses, to acquire images of the shooting objects and transmit the images to main control chips of terminals for processing to acquire information in the images.

In the process of implementing embodiments of the present disclosure, it is found that the related technologies at least have the following problems:
Since the images acquired by the shooting apparatuses are sent to the main control chips of the terminals for processing, a large amount of resources of the main control chips are occupied; and the main control chips need to be started and operating systems need to be loaded in advance, so that the dependence on the main control chips is strong, and the images acquired by the shooting apparatuses are not processed in time.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

The embodiments of the present disclosure provide a method and an apparatus for realizing 3D display, and a 3D display terminal, to solve the technical problems that a large amount of resources of a main control chip are occupied, the dependence on the main control chip is strong, and the image obtained by a shooting apparatus is not processed in time.

In some embodiments, the method for realizing 3D display comprises:
acquiring an image having eye space information of a user;
acquiring eye positions of the user according to the image having the eye space information of the user and by means of a displacement sensor that operates independently relative to a main control chip of a 3D display terminal; and
generating 3D display content according to a to-be-displayed image and the eye positions of the user.

In some embodiments, acquiring eye positions of the user according to the image having the eye space information of the user and by means of a displacement sensor may comprise:
acquiring the eye positions of the user according to the image having the eye space information of the user and by means of the displacement sensor that is arranged at a position other than the main control chip and controlled by a device other than the main control chip.

In some embodiments, acquiring eye positions of the user according to the image having the eye space information of the user and by means of a displacement sensor may comprise:
acquiring the eye positions of the user according to the image having the eye space information of the user and by means of the displacement sensor that is triggered or started by a device other than the main control chip.

In some embodiments, acquiring eye positions of the user according to the image having the eye space information of the user may comprise:
acquiring space coordinates of eyes of the user by obtaining eye depth information according to eye plane position information contained in the image having the eye space information of the user.

In some embodiments, generating 3D display content according to a to-be-displayed image and the eye positions of the user may comprise:
rendering the to-be-displayed image into a left-eye image and a right-eye image; and
performing pixel distribution of the left-eye image and the right-eye image on a 3D display screen of the 3D display terminal according to eye coordinates.

In some embodiments, performing pixel distribution of the left-eye image and the right-eye image on a 3D display screen according to eye coordinates may comprise:
distributing the left-eye image and the right-eye image to the pixels, corresponding to the eye coordinates, of the 3D display screen.

In some embodiments, acquiring an image having eye space information of a user may comprise:
acquiring the image having eye space information of the user by a camera module.

In some embodiments, acquiring the image having eye space information of the user by a camera module may comprise:
acquiring black-and-white images of a shooting object by at least two black-and-white cameras.

In some embodiments, the 3D display content may also be displayed through the 3D display screen of the 3D display terminal.

In some embodiments, the method for realizing 3D display comprises:
acquiring images in a 3D shooting manner; performing eye positioning for a user with a displacement sensor that operates independently relative to a main control chip of a 3D display terminal;
generating 3D display content according to the images acquired in the 3D shooting manner and results of eye positioning.

In some embodiments, acquiring images in a 3D shooting manner may comprise: acquiring color images containing parallax by at least two color cameras;
and/or,
performing eye positioning for a user with a displacement sensor may comprise: acquiring eye positions of the user by means of the displacement sensor.

In some embodiments, the method for realizing 3D display may further comprise:
acquiring first depth-of-field (DOF) information of a first shooting object by a DOF camera; and
adjusting second DOF information in a color image according to the first DOF information;
wherein the color image is a color image of the first shooting object that can be adjusted according to the first DOF information.

In some embodiments, adjusting second DOF information in a color image according to the first DOF information may comprise:
adjusting depths of field (DOFs) of corresponding pixels contained in the second DOF information based on the DOFs of the pixels contained in the first DOF information, so that the DOFs of corresponding pixels contained in the second DOF information approach the DOFs of the pixels contained in the first DOF information.

In some embodiments, adjusting the DOFs of corresponding pixels contained in the second DOF information based on the DOFs of the pixels contained in the first DOF information may comprise:
adjusting the DOFs of corresponding pixels contained in the second DOF information to the DOFs of the pixels contained in the first DOF information in proportion; or,
adjusting the DOFs of corresponding pixels contained in the second DOF information as the DOFs of the pixels contained in the first DOF information.

In some embodiments, the method for realizing 3D display may further comprise: adjusting the DOF of pixels, other than corresponding pixels, contained in the second DOF information based on the DOF of pixels contained in the first DOF information.

In some embodiments, adjusting the DOF of pixels, other than corresponding pixels, contained in the second DOF information based on the DOF of pixels contained in the first DOF information may comprise:
adjusting the DOF of pixels, other than corresponding pixels, contained in the second DOF information to the DOF of pixels contained in the first DOF information in proportion in a preset region; or,
adjusting the DOF of pixels, other than corresponding pixels, contained in the second DOF information as the DOF of pixels contained in the first DOF information in the preset region.

In some embodiments, acquiring first DOF information of a first shooting object by a DOF camera may comprise:
acquiring the first DOF information of the first shooting object by a structured light camera or a time of flight (TOF) camera.

In some embodiments, acquiring color images of the first shooting object by at least two color cameras may comprise:
acquiring a first color image by a first color camera, and acquiring a second color image by a second color camera; and
compositing the first color image and the second color image into a color compositing image containing the second DOF information according to spacing and shooting angles of the first color camera and the second color camera.

In some embodiments, the color compositing image may comprise a left half image and a right half image;
wherein the left half image is a color image, and the right half image is a DOF image.

In some embodiments, performing eye positioning for a user with a displacement sensor may comprise:
acquiring eye positions of the user by means of the displacement sensor that is arranged at a position other than the main control chip and controlled by a device other than the main control chip.

In some embodiments, acquiring eye positions of the user by means of the displacement sensor may comprise:
acquiring eye positions of the user by means of the displacement sensor triggered or started by a device other than the main control chip.

In some embodiments, the method for realizing 3D display may further comprise: acquiring images of a second shooting object comprising eye positions of the user.

In some embodiments, acquiring images of a second shooting object may comprise:
acquiring the images of the second shooting object by an image acquisition camera module.

In some embodiments, acquiring the images of the second shooting object by an image acquisition camera module may comprise:
acquiring the images of the second shooting object by at least two image acquisition cameras.

In some embodiments, acquiring the images of the second shooting object by at least two image acquisition cameras may comprise:
acquiring black-and-white images of the second shooting object by at least two black-and-white cameras.

In some embodiments, acquiring eye positions of the user may comprise:
acquiring eye coordinates of eyes of the user by obtaining eye depth information according to eye plane position information contained in the images of the second shooting object.

Optionally, the eye coordinates of eyes of the user may be space coordinates of eyes of the user.

In some embodiments, the method for realizing 3D display may further comprise: transmitting the eye positions of the user to a 3D display module that operates independently relative to the main control chip; and generating 3D display content by the 3D display module according to images acquired in a 3D shooting manner and the eye positions of the user.

In some embodiments, generating 3D display content by the 3D display module may comprise:
generating the 3D display content by the 3D display module that is arranged at a position other than the main control chip and controlled by a device other than the main control chip according to the images acquired in the 3D shooting manner and the eye positions.

In some embodiments, generating 3D display content by the 3D display module may comprise:
generating the 3D display content by the 3D display module triggered or started by a device other than the main control chip according to the images acquired in the 3D shooting manner and the eye positions.

In some embodiments, generating 3D display content by the 3D display module may comprise:
rendering the images acquired in the 3D shooting manner into a left-eye image and a right-eye image by the 3D display module, and performing pixel distribution of the left-eye image and the right-eye image according to eye coordinates.

In some embodiments, performing pixel distribution of the left-eye image and the right-eye image according to eye coordinates may comprise:
distributing the left-eye image and the right-eye image to the pixels, corresponding to the eye coordinates, of the 3D display screen of the 3D display terminal.

In some embodiments, the method for realizing 3D display may further comprise: displaying the 3D display content through the 3D display screen of the 3D display terminal.

In some embodiments, the method for realizing 3D display comprises:
acquiring the eye positions of the user by means of the displacement sensor that operates independently relative to the main control chip of the 3D display terminal, and transmitting the eye positions of the user to the 3D display module that operates independently relative to the main control chip; and
generating the 3D display content according to the to-be-displayed image and the eye positions of the user by the 3D display module.

In some embodiments, acquiring the eye positions of the user by means of the displacement sensor may comprise:
acquiring the eye positions of the user by means of the displacement sensor that is arranged at a position other than the main control chip and controlled by a device other than the main control chip.

In some embodiments, acquiring the eye positions of the user by means of the displacement sensor may comprise:
acquiring the eye positions of the user by means of the displacement sensor triggered or started by a device other than the main control chip.

In some embodiments, the method may further comprise: acquiring images of a shooting object comprising the eye positions of the user.

In some embodiments, acquiring images of a shooting object may comprise:
acquiring the images of the shooting object by a camera module.

In some embodiments, acquiring the images of the shooting object by a camera module may comprise:
acquiring the images of the shooting object by at least two cameras.

In some embodiments, acquiring the images of the shooting object by at least two cameras may comprise:
acquiring black-and-white images of the shooting object by at least two black-and-white cameras.

In some embodiments, acquiring eye positions of the user may comprise:
acquiring eye coordinates of eyes of the user by obtaining eye depth information according to eye plane position information contained in the images of the shooting object.

In some embodiments, generating the 3D display content according to the to-be-displayed image and the eye positions by the 3D display module may comprise:
generating the 3D display content according to the to-be-displayed image and the eye positions by the 3D display module that is arranged at a position other than the main control chip and controlled by a device other than the main control chip.

In some embodiments, generating the 3D display content according to the to-be-displayed image and the eye positions by the 3D display module may comprise:
generating the 3D display content according to the to-be-displayed image and the eye positions by the 3D display module triggered or started by a device other than the main control chip.

In some embodiments, generating the 3D display content according to the to-be-displayed image and the eye positions by the 3D display module may comprise:
rendering the to-be-displayed image into a left-eye image and a right-eye image by the 3D display module, and performing pixel distribution of the left-eye image and the right-eye image according to the eye positions.

In some embodiments, performing pixel distribution of the left-eye image and the right-eye image according to the eye positions may comprise:
distributing the left-eye image and the right-eye image to the pixels, corresponding to the eye positions, of the 3D display screen of the 3D display terminal.

In some embodiments, the 3D display content may further be displayed through the 3D display screen of the 3D display terminal.

In some embodiments, the apparatus for realizing 3D display comprises a processor and a memory storing program instructions; and the processor is configured to perform the method for realizing 3D display when the program instructions are performed.

In some embodiments, the apparatus for realizing 3D display comprises:
an image acquisition apparatus, which is configured to acquire an image having eye space information of a user;
a displacement sensor, which operates independently relative to a main control chip of a 3D display terminal and is configured to acquire eye positions of the user according to the image having the eye space information of the user; and
a 3D image processor, which is configured to determine 3D display content according to the eye positions of the user.

In some embodiments, the displacement sensor may be arranged at a position other than the main control chip and configured to be controlled by a device other than the main control chip.

In some embodiments, the displacement sensor may be configured to be triggered or started by a device other than the main control chip.

In some embodiments, the displacement sensor may be configured to:
acquire space coordinates of eyes of the user by obtaining eye depth information according to eye plane position information contained in the image having the eye space information of the user.

In some embodiments, the 3D image processor may be configured to:
render the to-be-displayed image into a left-eye image and a right-eye image; and
perform pixel distribution of the left-eye image and the right-eye image on the 3D display screen of the 3D display terminal according to eye coordinates.

In some embodiments, the 3D image processor may be configured to:
distribute the left-eye image and the right-eye image to the pixels, corresponding to the eye coordinates, of the 3D display screen.

In some embodiments, the image acquisition apparatus may comprise a camera module, which is configured to acquire the image having eye space information of the user.

In some embodiments, the camera module may comprise at least two black-and-white cameras, which are configured to acquire black-and-white images having the eye space information of the user.

In some embodiments, at least two black-and-white cameras may use optical lenses and sensor chips with the same performance indexes.

In some embodiments, the image acquisition apparatus may further comprise an illumination component, which is configured to provide illumination when acquiring images.

In some embodiments, the illumination component may comprise at least one of:
a visible-light lamp and an infrared lamp.

In some embodiments, the apparatus for realizing 3D display may further comprise:
a 3D display screen, which is configured to display 3D display content.

In some embodiments, the apparatus for realizing 3D display comprises:
a 3D shooting apparatus, which is configured to acquire images in a 3D shooting manner;
a displacement sensor, which operates independently relative to a main control chip of the 3D display terminal and is configured to position the eyes of the user; and
a 3D display module, which is configured to generate 3D display content according to the images acquired in the 3D shooting manner and the results of eye positioning.

In some embodiments, the 3D shooting apparatus may comprise a color camera module, which is provided with at least two color cameras and is configured to acquire color images containing parallax;
and/or,
the displacement sensor, which may be configured to acquire eye positions of the user.

In some embodiments, the apparatus for realizing 3D display may further comprise:
a DOF camera, which is configured to acquire first DOF information of a first shooting object; and
an image processor, which is configured to adjust second DOF information in a color image according to the first DOF information;
wherein the color image is a color image of the first shooting object that can be adjusted according to the first DOF information.

In some embodiments, the image processor may be configured to:
adjust the DOFs of corresponding pixels contained in the second DOF information based on the DOFs of the pixels contained in the first DOF information, so that the DOFs of corresponding pixels contained in the second DOF information approach the DOFs of the pixels contained in the first DOF information.

In some embodiments, the image processor may be configured to:
adjust the DOFs of corresponding pixels contained in the second DOF information to the DOFs of the pixels contained in the first DOF information in proportion; or
adjust the DOFs of corresponding pixels contained in the second DOF information as the DOFs of the pixels contained in the first DOF information.

In some embodiments, the image processor may further be configured to: adjust the DOF of pixels, other than corresponding pixels, contained in the second DOF information based on the DOF of pixels contained in the first DOF information.

In some embodiments, the image processor may be configured to:
adjust the DOF of pixels, other than corresponding pixels, contained in the second DOF information to the DOF of pixels contained in the first DOF information in proportion in a preset region; or
adjust the DOF of pixels, other than corresponding pixels, contained in the second DOF information as the DOF of pixels contained in the first DOF information in the preset region.

In some embodiments, the DOF camera may be configured to: acquire first DOF information of a first shooting object containing the DOF of pixels;
wherein the DOF camera is: a structured light camera or a TOF camera.

In some embodiments, the color camera module may comprise:
a first color camera, which is configured to acquire a first color image;
a second color camera, which is configured to acquire a second color image; and
the image processor, which may be configured to:
   composite the first color image and the second color image into a color compositing image containing the second DOF information according to spacing and shooting angles of the first color camera and the second color camera.

In some embodiments, the color compositing image may comprise a left half image and a right half image;
wherein the left half image is a color image, and the right half image is a DOF image.

In some embodiments, the DOF camera may be a TOF camera, which may be located between the first color camera and the second color camera.

In some embodiments, the displacement sensor may be arranged at a position other than the main control chip and configured to be controlled by a device other than the main control chip.

In some embodiments, the displacement sensor may be configured to be triggered or started by a device other than the main control chip.

In some embodiments, the apparatus for realizing 3D display may further comprise: an image acquisition apparatus, which is configured to acquire images of a second shooting object comprising eye positions of the user.

In some embodiments, the image acquisition apparatus may comprise:
an image acquisition camera module, which is configured to acquire the images of the second shooting object.

In some embodiments, the image acquisition camera module may comprise:
at least two image acquisition cameras, which are configured to acquire the images of the second shooting object.

In some embodiments, at least two image acquisition cameras may comprise:
at least two black-and-white cameras, which are configured to acquire black-and-white images of the second shooting object.

In some embodiments, the displacement sensor may be configured to:
acquire eye coordinates of eyes of the user by obtaining eye depth information according to eye plane position information contained in the images of the second shooting object.

Optionally, the eye coordinates of eyes of the user may be space coordinates of eyes of the user.

In some embodiments, the 3D display module may operate independently relative to the main control chip, and is configured to generate 3D display content according to images acquired in a 3D shooting manner and the eye positions of the user.

In some embodiments, the 3D display module may be arranged at a position other than the main control chip and configured to be controlled by a device other than the main control chip.

In some embodiments, the 3D display module may be configured to be triggered or started by a device other than the main control chip.

In some embodiments, the 3D display module may be configured to:
render the images acquired in the 3D shooting manner into a left-eye image and a right-eye image, and perform pixel distribution of the left-eye image and the right-eye image according to eye coordinates.

In some embodiments, the 3D display module may be configured to:
distribute the left-eye image and the right-eye image to the pixels, corresponding to the eye coordinates, of the 3D display screen of the 3D display terminal.

In some embodiments, the apparatus for realizing 3D display may further comprise:
the 3D display screen, which is configured to display 3D display content.

In some embodiments, at least two color cameras may use optical lenses and sensor chips with the same performance indexes; and/or
at least two black-and-white cameras may use optical lenses and sensor chips with the same performance indexes.

In some embodiments, at least two color cameras may comprise two color cameras arranged at the upper part of the 3D display terminal; and/or
at least two black-and-white cameras may comprise two black-and-white cameras arranged at the upper part of the 3D display terminal.

In some embodiments, spacing between the two black-and-white cameras may be set with reference to an interpupillary distance.

In some embodiments, at least two color cameras and at least two black-and-white cameras may be arranged in the same direction.

In some embodiments, at least two color cameras and at least two black-and-white cameras may be arranged in different directions;
wherein at least two black-and-white cameras are arranged to face the user, and at least two color cameras are arranged to face away from the user.

In some embodiments, at least two color cameras may be arranged on the same horizontal line, and at least two black-and-white cameras may be arranged on the same horizontal line; or,
at least two color cameras and at least two black-and-white cameras may be arranged on the same horizontal line.

In some embodiments, the apparatus for realizing 3D display may further comprise: at least two loudspeakers and at least two microphones.

In some embodiments, at least two loudspeakers may comprise two loudspeakers, which are arranged at the upper part of the 3D display terminal; and/or,
at least two microphones may comprise two microphones, which are arranged at the lower part of the 3D display terminal.

In some embodiments, the spacing between the two loudspeakers may be set with reference to the distance between two ears.

In some embodiments, at least two loudspeakers may be arranged on the same horizontal line; and/or,
at least two microphones may be arranged on the same horizontal line.

In some embodiments, the apparatus for realizing 3D display comprises:
a displacement sensor, which operates independently relative to a main control chip of the 3D display terminal and is configured to acquire eye positions of the user and transmit the eye positions of the user to a 3D display module operating independently relative to the main control chip; and
the 3D display module, which is configured to generate 3D display content according to a to-be-displayed image and the eye positions of the user.

In some embodiments, the displacement sensor may be arranged at a position other than the main control chip and configured to be controlled by a device other than the main control chip.

In some embodiments, the displacement sensor may be configured to be triggered or started by a device other than the main control chip.

In some embodiments, the apparatus for realizing 3D display may further comprise: an image acquisition apparatus, which is configured to acquire images of the shooting object comprising the eye positions of the user.

In some embodiments, the image acquisition apparatus may comprise:
a camera module, which is configured to acquire the images of the shooting object.

In some embodiments, the camera module may comprise:
at least two cameras, which are configured to acquire the images of the shooting object.

In some embodiments, the above at least two cameras may comprise:
at least two black-and-white cameras, which are configured to acquire black-and-white images of the shooting object.

In some embodiments, the above at least two black-and-white cameras may use optical lenses and sensor chips with the same performance indexes.

In some embodiments, the displacement sensor may be configured to:
acquire eye coordinates of eyes of the user by obtaining eye depth information according to eye plane position information contained in the images of the shooting object.

In some embodiments, the 3D display module may be arranged at a position other than the main control chip and configured to be controlled by a device other than the main control chip.

In some embodiments, the 3D display module may be configured to be triggered or started by a device other than the main control chip.

In some embodiments, the 3D display module may be configured to:
render the to-be-displayed image into a left-eye image and a right-eye image, and perform pixel distribution of the left-eye image and the right-eye image according to the eye positions.

In some embodiments, the 3D display module may be configured to:
distribute the left-eye image and the right-eye image to the pixels, corresponding to the eye positions, of the 3D display screen of the 3D display terminal.

In some embodiments, the 3D display module may comprise a 3D processing chip, which is configured to: generate 3D display content according to the to-be-displayed image and the eye positions of the user.

In some embodiments, the apparatus for realizing 3D display may further comprise:
the 3D display screen, which is configured to display the 3D display content.

In some embodiments, the 3D display terminal comprises the above apparatus for realizing 3D display.

The method and the apparatus for realizing 3D display, and the 3D display terminal provided by the embodiments of the present disclosure may achieve the following technical effects:
The displacement sensor that operates independently relative to the main control chip of the 3D display terminal is used to directly process the acquired image having the eye space information of the user, instead of processing the image by means of the main control chip of the 3D display terminal, so as to avoid occupancy of a large amount of resources of the main control chip caused by processing the image having the eye space information of the user, so that and dependence on the main control chip is reduced, and the timeliness of image processing is improved.

The displacement sensor that operates independently relative to the main control chip of the 3D display terminal is used to directly position the eyes of the user, instead of positioning the eyes of the user by means of the main control chip of the 3D display terminal, so as to avoid occupancy of a large amount of resources of the main control chip caused by positioning the eyes of the user, so that and dependence on the main control chip is reduced, and the timeliness of image processing is improved.

The above general descriptions and the following descriptions are exemplary and explanatory only, and are not used to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a flow chart of a method for realizing 3D display provided by embodiments of the present disclosure;
Fig. 2 is a flow chart of another method for realizing 3D display provided by embodiments of the present disclosure;
Fig. 3 is a schematic flow chart of a method for realizing 3D display provided by embodiments of the present disclosure;
Fig. 4 is a schematic flow chart of adjustment of DOF provided by embodiments of the present disclosure;
Fig. 5 is a schematic flow chart of acquisition of color images provided by embodiments of the present disclosure;
Fig. 6 is a schematic flow chart of generation of 3D display content provided by embodiments of the present disclosure;
Fig. 7 is another schematic flow chart of generation of 3D display content provided by embodiments of the present disclosure;
Fig. 8 is a flow chart of a method for realizing 3D display provided by embodiments of the present disclosure;
Fig. 9 is a flow chart of another method for realizing 3D display provided by embodiments of the present disclosure;
Fig. 10 is a structural diagram of an apparatus for realizing 3D display provided by embodiments of the present disclosure;
Fig. 11 is a structural diagram of a second apparatus for realizing 3D display provided by embodiments of the present disclosure;
Fig. 12 is a structural diagram of an another apparatus for realizing 3D display provided by embodiments of the present disclosure;
Fig. 13 is an apparatus structural diagram of an image acquisition apparatus provided by embodiments of the present disclosure;
Fig. 14 is another apparatus structural diagram of the image acquisition apparatus provided by embodiments of the present disclosure;
Fig. 15 is another apparatus structural diagram of the image acquisition apparatus provided by embodiments of the present disclosure;
Fig. 16 is an apparatus structural diagram of an illumination component provided by embodiments of the present disclosure;
Fig. 17 is a structural diagram of another apparatus for realizing 3D display provided by embodiments of the present disclosure;
Fig. 18 is another structural schematic diagram of an apparatus for realizing 3D display provided by embodiments of the present disclosure;
Fig. 19 is a structural schematic diagram of a 3D shooting apparatus provided by embodiments of the present disclosure;
Fig. 20 is another structural schematic diagram of the apparatus for realizing 3D display provided by embodiments of the present disclosure;
Figs. 21A and 21B are structural schematic diagrams of a DOF camera provided by embodiments of the present disclosure;
Fig. 22 is a structural schematic diagram of a color camera module provided by embodiments of the present disclosure;
Fig. 23 is a schematic diagram of position of the DOF camera provided by embodiments of the present disclosure;
Fig. 24 is another structural schematic diagram of the apparatus for realizing 3D display provided by embodiments of the present disclosure;
Fig. 25 is a structural schematic diagram of an image acquisition apparatus provided by embodiments of the present disclosure;
Fig. 26 is a structural schematic diagram of an image acquisition camera module provided by embodiments of the present disclosure;
Fig. 27 is a structural schematic diagram of an image acquisition camera provided by embodiments of the present disclosure;
Fig. 28 is another structural schematic diagram of an apparatus for realizing 3D display provided by embodiments of the present disclosure;
Figs. 29A, 29B, 30 and 31 are schematic diagrams of positions of color cameras and black-and-white cameras provided by embodiments of the present disclosure;
Figs. 32A and 32B are schematic diagrams of positions of loudspeakers and microphones provided by embodiments of the present disclosure;
Fig. 33 is a structural diagram of another apparatus for realizing 3D display provided by embodiments of the present disclosure;
Fig. 34 is a structural diagram of another apparatus for realizing 3D display provided by embodiments of the present disclosure;
Fig. 35 is a structural diagram of another apparatus for realizing 3D display provided by embodiments of the present disclosure;
Fig. 36 is a structural diagram of another apparatus for realizing 3D display provided by embodiments of the present disclosure;
Fig. 37 is a structural diagram of another apparatus for realizing 3D display provided by embodiments of the present disclosure;
Fig. 38 is a structural diagram of another apparatus for realizing 3D display provided by embodiments of the present disclosure; and
Fig. 39 is an apparatus structural diagram of a 3D display terminal provided by embodiments of the present disclosure.

### Reference numerals:

300: apparatus for realizing 3D display; 310: processor; 320: memory; 330: communication interface; 340: bus; 400: apparatus for realizing 3D display; 401: image acquisition apparatus; 402: 3D image processor; 403: displacement sensor; 404: 3D display screen; 410: camera module; 411: first black-and-white camera; 412: second black-and-white camera; 420: illumination component; 421: visible-light lamp; 422: infrared lamp; 430: main control chip; 500: 3D display terminal; 700: apparatus for realizing 3D display; 710: 3D shooting apparatus; 720: displacement sensor; 730: 3D display module; 711: color camera module; 7111: first color camera; 7112: second color camera; 740: DOF camera; 741: structured light camera; 742: TOF camera; 750: image processor; 760: image acquisition apparatus; 761: image acquisition camera module; 7611: first image acquisition camera; 7612: second image acquisition camera; 7616: first black-and-white camera; 7617: second black-and-white camera; 770: 3D display screen; 810: first loudspeaker; 820: second loudspeaker; 860: first microphone; 870: second microphone; 100: apparatus for realizing 3D display; 101: image acquisition apparatus; 102: camera module; 103: 3D display module; 104: 3D processing chip; 105: displacement sensor; 106: first black-and-white camera; 107: second black-and-white camera; and 108: 3D display screen.

### DETAILED DESCRIPTION

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure. In the following technical description, for the convenience of illustration, thorough understanding of the disclosed embodiments is provided through several details. However, one or more embodiments may still be implemented without the details. In other cases, to simplify the accompanying drawings, the well-known structures and apparatuses may be displayed briefly.

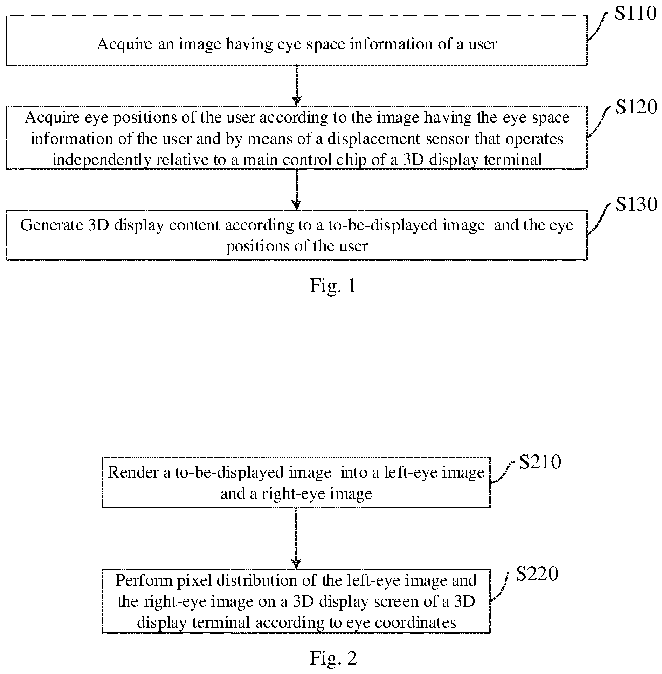

Referring to Fig. 1, embodiments of the present disclosure provide a method for realizing 3D display, comprising:
S 110: acquiring an image having eye space information of a user;
S120: acquiring eye positions of the user according to the image having the eye space information of the user and by means of a displacement sensor that operates independently relative to a main control chip of a 3D display terminal; and
S130: generating 3D display content according to a to-be-displayed image and the eye positions of the user.

In some embodiments, acquiring eye positions of the user according to the image having the eye space information of the user and by means of a displacement sensor may comprise:
acquiring the eye positions of the user according to the image having the eye space information of the user and by means of the displacement sensor that is arranged at a position other than the main control chip and controlled by a device other than the main control chip.

Optionally, the displacement sensor may be arranged inside the body of the 3D display terminal. Optionally, the displacement sensor is arranged at the body of the 3D display terminal and located inside the body.

In some embodiments, acquiring eye positions of the user according to the image having the eye space information of the user and by means of a displacement sensor may comprise:
acquiring the eye positions of the user according to the image having the eye space information of the user and by means of the displacement sensor that is arranged at the main control chip and controlled by a device other than the main control chip.

In some embodiments, the displacement sensor may be controlled by a device other than the main control chip, whether the displacement sensor is arranged at the main control chip or at a position other than the main control chip. Optionally, the displacement sensor may be controlled by a camera module capable of acquiring the image having the eye space information of the user. Optionally, the camera module may comprise at least two black-and-white cameras.

In some embodiments, the displacement sensor may also be controlled by the 3D display screen or other devices of the 3D display terminal according to actual application scenarios, preset strategies and the like.

In some embodiments, acquiring eye positions of the user according to the image having the eye space information of the user and by means of a displacement sensor may comprise:
acquiring the eye positions of the user according to the image having the eye space information of the user by means of the displacement sensor triggered or started by a device other than the main control chip.

Optionally, the displacement sensor may be triggered or started by at least two black-and-white cameras, a black-and-white camera module, the 3D display screen or other devices. The displacement sensor may be triggered or started in various manners, for example, the displacement sensor is triggered or started in a manner of electric pulses, digital signals or the like.

In some embodiments, at least two black-and-white cameras, the black-and-white camera module or the 3D display screen may transmit the electric pulses, the digital signals and the like to the displacement sensor; and the displacement sensor is triggered or started after the electric pulses and the digital signals are received.

In some embodiments, acquiring eye positions of the user according to the image having the eye space information of the user may comprise:
acquiring space coordinates of eyes of the user by obtaining eye depth information according to eye plane position information contained in the image having the eye space information of the user.

In some embodiments, the image having the eye space information of the user may be acquired by the black-and-white camera module comprising at least two black-and-white cameras; and the image contains eye plane position information. Optionally, the eye plane position information contained in a black-and-white image obtained by compositing at least two corresponding black-and-white images acquired by at least two black-and-white cameras with different shooting angles contains the eye depth information, so that the eye depth information may be obtained according to the eye plane position information contained in the black-and-white image, and the eye depth information may be converted into the space coordinates of eyes of the user.

Referring to Fig. 2, in some embodiments, generating 3D display content according to a to-be-displayed image and the eye positions of the user may comprise:
S210: rendering the to-be-displayed image into a left-eye image and a right-eye image; and
S220: performing pixel distribution of the left-eye image and the right-eye image on the 3D display screen of the 3D display terminal according to eye coordinates.

In some embodiments, performing pixel distribution of the left-eye image and the right-eye image on a 3D display screen according to eye coordinates may comprise:
distributing the left-eye image and the right-eye image to the pixels, corresponding to the eye coordinates, of the 3D display screen.

In some embodiments, a viewpoint matched with the eye coordinates may be selected from a plurality of viewpoints of the 3D display terminal; the to-be-displayed image is rendered into a left-eye image and a right-eye image matched with the angle of the viewpoint; and the left-eye image and the right-eye image are distributed to corresponding pixels of the 3D display screen of the 3D display terminal according to the angle of the viewpoint, to support the 3D display.

In some embodiments, acquiring an image having eye space information of a user may comprise:
acquiring the image having eye space information of the user by a camera module.

In some embodiments, acquiring the image having eye space information of the user by a camera module may comprise:
acquiring black-and-white images of a shooting object by at least two black-and-white cameras.

Optionally, the black-and-white images of the shooting object may be acquired by two black-and-white cameras, such as: a first black-and-white camera and a second black-and-white camera.

In some embodiments, the image having the eye space information of the user may be acquired by the first black-and-white camera and the second black-and-white camera; and the image contains the eye plane position information. Optionally, the eye plane position information contained in an black-and-white image acquired by compositing two corresponding black-and-white images obtained by the first black-and-white camera and the second black-and-white camera with different shooting angles contains the eye depth information, so that the eye depth information may be obtained according to the eye plane position information contained in the black-and-white image, and the eye depth information may be converted into the space coordinates of eyes of the user.

In some embodiments, the method for realizing 3D display may further comprise: displaying the 3D display content through the 3D display screen of the 3D display terminal.

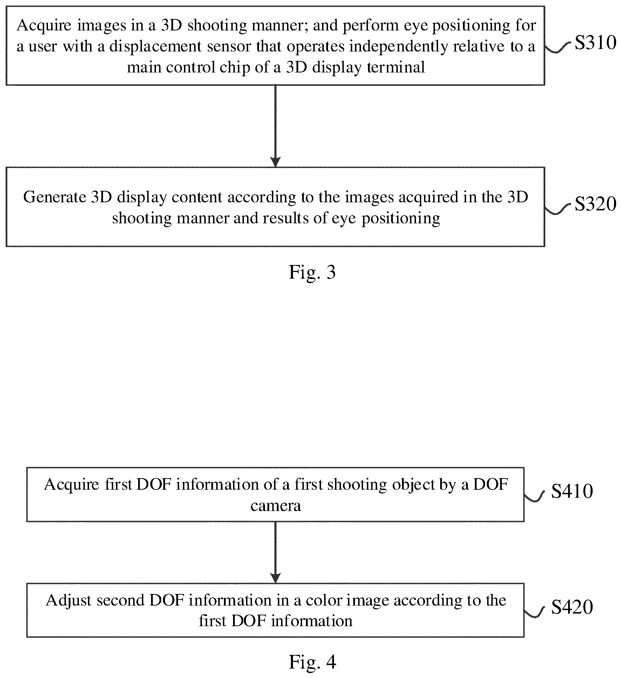

Referring to Fig. 3, embodiments of the present disclosure provide a method for realizing 3D display, comprising:
S310: acquiring images in a 3D shooting manner; performing eye positioning for a user with a displacement sensor that operates independently relative to a main control chip of a 3D display terminal; and
S320: generating 3D display content according to the images acquired in the 3D shooting manner and results of eye positioning.

In some embodiments, acquiring images in a 3D shooting manner may comprise: acquiring color images containing parallax by at least two color cameras;
and/or,
performing eye positioning for a user with a displacement sensor may comprise: acquiring eye positions of the user by means of the displacement sensor.

Referring to Fig. 4, in some embodiments, the method for realizing 3D display may further comprise:
S410: acquiring first DOF information of a first shooting object by a DOF camera; and
S420: adjusting second DOF information in a color image according to the first DOF information;
wherein the color image is a color image of the first shooting object that can be adjusted according to the first DOF information.

In some embodiments, adjusting second DOF information in a color image according to the first DOF information may comprise:
adjusting DOFs of corresponding pixels contained in the second DOF information based on the DOFs of the pixels contained in the first DOF information, so that the DOFs of corresponding pixels contained in the second DOF information approach the DOFs of the pixels contained in the first DOF information, to reduce the difference between the DOFs of corresponding pixels contained in the second DOF information and the DOFs of the pixels contained in the first DOF information.

In comparison, the color images acquired by the above at least two color cameras have high resolution and low accuracy of DOF, while the first DOF information (which may be presented in the form of DOF images) acquired by the DOF camera has low resolution and high accuracy of DOF. Therefore, the DOFs of corresponding pixels contained in the second DOF information may be adjusted based on the DOFs of the pixels contained in the first DOF information, so that the DOFs of corresponding pixels contained in the second DOF information may approach the DOFs of corresponding pixels contained in the first DOF information, to reduce the difference between the DOFs of corresponding pixels contained in the second DOF information and the DOFs of corresponding pixels contained in the first DOF information, and effectively improve the accuracy of the DOFs of corresponding pixels contained in the second DOF information.

In some embodiments, before the DOFs of corresponding pixels contained in the second DOF information are adjusted on the basis of the DOFs of the pixels contained in the first DOF information (DOF image), the sizes of the DOF image and the color image may be unified first; and then, characteristic values of the DOF image and the color image are captured and matched on the basis of a field of view (FOV) between the DOF camera and the color camera, so that the pixels in the DOF image correspond to corresponding pixels in the color image in pixels; and in this way, the DOFs of the pixels in the DOF image may be compared with the DOFs of corresponding pixels in the color image, and the DOF may be adjusted according to the comparison result.

In some embodiments, adjusting the DOFs of corresponding pixels contained in the second DOF information based on the DOFs of the pixels contained in the first DOF information may comprise:
adjusting the DOFs of corresponding pixels contained in the second DOF information to the DOFs of the pixels contained in the first DOF information in proportion; or,
adjusting the DOFs of corresponding pixels contained in the second DOF information as the DOFs of the pixels contained in the first DOF information.

In some embodiments, the DOFs of corresponding pixels contained in the second DOF information may be adjusted to the DOFs of the pixels contained in the first DOF information based on the difference between the DOFs of corresponding pixels contained in the second DOF information and the DOFs of the pixels contained in the first DOF information according to a certain proportion of the difference. For example, if the difference between the DOFs of corresponding pixels contained in the second DOF information and the DOFs of the pixels contained in the first DOF information is 5 cm, the DOFs of corresponding pixels contained in the second DOF information may be adjusted by 10%, 20%, 30%, 50%, 80% and the like of 5 cm, i.e.: 5 mm, 1 cm, 1.5 cm, 2.5 cm, 4 cm and the like, to the DOFs of the pixels contained in the first DOF information according to actual situations, preset strategies or other operating manners.

In some embodiments, the DOFs of corresponding pixels contained in the second DOF information may also be directly adjusted to the DOFs of the pixels contained in the first DOF information. For example, if the difference between the DOFs of corresponding pixels contained in the second DOF information and the DOFs of the pixels contained in the first DOF information is 5 cm, the DOFs of corresponding pixels contained in the second DOF information may be directly adjusted by 5 cm to the DOFs of the pixels contained in the first DOF information according to the actual situations, the preset strategies or other operating manners.

When the DOF is adjusted as above, since the resolution of the first DOF information acquired by the DOF camera is low, all pixels in the DOF image may only correspond to some pixels in the color image, so that the DOF of some or all pixels, other than corresponding pixels, contained in the second DOF information may not be effectively adjusted. In such a case, in some embodiments, the method for realizing 3D display may further comprise: adjusting the DOF of pixels, other than corresponding pixels, contained in the second DOF information based on the DOF of pixels contained in the first DOF information, to effectively adjust the DOF of pixels, other than corresponding pixels, contained in the second DOF information and effectively improve the accuracy of DOF.

In some embodiments, adjusting the DOF of pixels, other than corresponding pixels, contained in the second DOF information based on the DOF of pixels contained in the first DOF information may comprise:
adjusting the DOF of pixels, other than corresponding pixels, contained in the second DOF information to the DOF of pixels contained in the first DOF information in proportion in a preset region; or,
adjusting the DOF of pixels, other than corresponding pixels, contained in the second DOF information as the DOF of pixels contained in the first DOF information in the preset region.

In some embodiments, the preset region may be set according to the actual situations or the preset strategies or other operating manners. Optionally, the preset region may comprise a single corresponding pixel in the second DOF information and non-corresponding pixels around the single corresponding pixel (i.e.: the second DOF information has no pixel corresponding to the pixels in the first DOF information), for example, the preset region may be a circular region formed by taking the single corresponding pixel as the center and taking other values such as half of the distance between the single corresponding pixel and another adjacent single corresponding pixel as the radius. Optionally, different preset regions may not be overlapped, to avoid possible pixel adjustment conflicts.

Optionally, the preset region may further comprise at least two corresponding pixels in the second DOF information and non-corresponding pixels around the two corresponding pixels, for example, when the DOFs of the above at least two corresponding pixels are adjusted by the same amount, the preset region may be a circular region formed by taking a mid-point of the two corresponding pixels as the center and taking a greater value such as half of the distance between the two corresponding pixels as the radius. Optionally, different preset regions may be overlapped, as long as the possible pixel adjustment conflicts can be avoided.

Optionally, the size and shape of the preset region may also be different according to the actual situations, the preset strategies or other operating manners, for example, the preset region may be scaled up or down, and the preset region may be oval, polygonal or the like.

In some embodiments, when the DOF is adjusted in the preset region, the DOFs of corresponding pixels contained in the second DOF information may be adjusted to the DOFs of the pixels contained in the first DOF information based on the difference between the DOFs of corresponding pixels contained in the second DOF information and the DOFs of the pixels contained in the first DOF information according to a certain proportion of the difference. For example, if the difference between the DOFs of corresponding pixels contained in the second DOF information and the DOFs of the pixels contained in the first DOF information is 5 cm, the DOFs of corresponding pixels contained in the second DOF information may be adjusted by 10%, 20%, 30%, 50%, 80% and the like of 5 cm, i.e., 5 mm, 1 cm, 1.5 cm, 2.5 cm, 4 cm and the like, to the DOFs of the pixels contained in the first DOF information according to actual situations, preset strategies or other operating manners.

In some embodiments, when the DOF is adjusted in the preset region, the DOFs of corresponding pixels contained in the second DOF information may also be directly adjusted to the DOFs of the pixels contained in the first DOF information. For example, if the difference between the DOFs of corresponding pixels contained in the second DOF information and the DOFs of the pixels contained in the first DOF information is 5 cm, the DOFs of corresponding pixels contained in the second DOF information may be directly adjusted by 5 cm to the DOFs of the pixels contained in the first DOF information according to the actual situations, the preset strategies or other operating manners.

In some embodiments, acquiring first DOF information of a first shooting object by a DOF camera may comprise:
acquiring the first DOF information of the first shooting object by a structured light camera or a TOF camera.

In some embodiments, the above at least two color cameras may acquire at least two corresponding color images. In such a case, the DOFs of some or all color images may be adjusted as above. For example, the DOF of one color image, the DOFs of two color images, or the DOFs of all color images are adjusted.

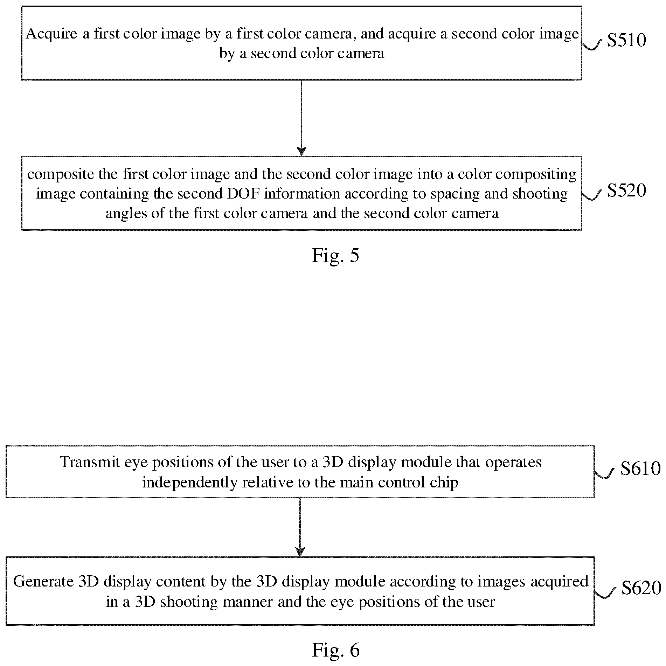

Referring to Fig. 5, in some embodiments, acquiring color images of the first shooting object by at least two color cameras may comprise:
S510: acquiring a first color image by a first color camera, and acquiring a second color image by a second color camera; and
S520: compositing the first color image and the second color image into a color compositing image containing the second DOF information according to spacing and shooting angles of the first color camera and the second color camera.

In some embodiments, the first color camera and the second color camera may be the same color camera. Optionally, the first color camera and the second color camera may also be different color cameras. In such a case, in order to successfully composite the color compositing image, the first color image and the second color image may be calibrated and corrected.

In some embodiments, the color compositing image of the first shooting object may also be acquired by at least two color cameras in other feasible modes than that shown in Fig. 5. Optionally, the color compositing image may also be acquired on the basis of parameters other than the spacing and the shooting angles. Optionally, more than two color cameras may be used when the color compositing image is acquired, for example, three or more color cameras, as long as the color compositing image can be successfully composited.

In some embodiments, the 3D display may also be performed on the adjusted color compositing image. Various 3D display modes are feasible and will not be repeated here, as long as the 3D display is successfully performed on the color compositing image with adjusted DOF.

In some embodiments, the color compositing image may comprise a left half image and a right half image;
wherein the left half image is a color image, and the right half image is a DOF image.

In some embodiments, performing eye positioning for a user with a displacement sensor may comprise:
acquiring eye positions of the user by means of the displacement sensor that is arranged at a position other than the main control chip and controlled by a device other than the main control chip.

Optionally, the displacement sensor may be arranged inside the body of the 3D display terminal. Optionally, the displacement sensor is arranged at the body of the 3D display terminal and located inside the body.

In some embodiments, acquiring eye positions of the user by means of a displacement sensor may comprise:
acquiring the eye positions of the user by means of the displacement sensor that is arranged at the main control chip and controlled by a device other than the main control chip.

In some embodiments, the displacement sensor may be controlled by a device other than the main control chip, whether the displacement sensor is arranged at the main control chip or at a position other than the main control chip.

In some embodiments, the displacement sensor may also be controlled by the 3D display screen or other devices of the 3D display terminal according to actual application scenarios, preset strategies and the like.

In some embodiments, acquiring eye positions of the user by means of a displacement sensor may comprise:
acquiring the eye positions of the user by means of the displacement sensor triggered or started by a device other than the main control chip.

In some embodiments, the method for realizing 3D display may further comprise: acquiring images of a second object comprising the eye positions of the user.

In some embodiments, acquiring images of a second object may comprise:
acquiring the images of the second shooting object by an image acquisition camera module.

In some embodiments, acquiring the images of the second shooting object by an image acquisition camera module may comprise:
acquiring the images of the second shooting object by at least two image acquisition cameras.

In some embodiments, acquiring the images of the second shooting object by at least two image acquisition cameras may comprise:
acquiring black-and-white images of the second shooting object by at least two black-and-white cameras.

In some embodiments, the displacement sensor may be controlled by the above at least two black-and-white cameras or the image acquisition camera module containing the above at least two black-and-white cameras.

Optionally, the displacement sensor may be triggered or started by the above at least two black-and-white cameras, the image acquisition camera module, the 3D display screen or other devices. The displacement sensor may be triggered or started in various manners, for example, the displacement sensor is triggered or started in a manner of electric pulses, digital signals or the like.

In some embodiments, the above at least two black-and-white cameras, the image acquisition camera module or the 3D display screen may transmit the electric pulses, the digital signals and the like to the displacement sensor; and the displacement sensor is triggered or started after the electric pulses and the digital signals are received.

In some embodiments, acquiring eye positions of the user may comprise:
acquiring eye coordinates of eyes of the user by obtaining eye depth information according to eye plane position information contained in the images of the second shooting object.

Optionally, the eye coordinates of eyes of the user may be space coordinates of eyes of the user.

In some embodiments, the black-and-white images obtained by the black-and-white cameras contain the eye plane position information. Optionally, the eye plane position information contained in a black-and-white image obtained by compositing at least two corresponding black-and-white images acquired by at least two black-and-white cameras with different shooting angles contains eye depth information, so that the eye depth information may be obtained according to the eye plane position information contained in the black-and-white image, and the eye depth information may be converted into the eye coordinates of eyes of the user.

Referring to Fig. 6, in some embodiments, the method for realizing 3D display may further comprise:
S610: transmitting the eye positions of the user to a 3D display module that operates independently relative to the main control chip; and
S620: generating 3D display content by the 3D display module according to images acquired in a 3D shooting manner and the eye positions of the user.

In some embodiments, generating 3D display content by the 3D display module may comprise:
generating the 3D display content by the 3D display module that is arranged at a position other than the main control chip and controlled by a device other than the main control chip according to the images acquired in the 3D shooting manner and the eye positions.

Optionally, the 3D display module may be arranged inside the body of the 3D display terminal. Optionally, the 3D display module is arranged at the body of the 3D display terminal and located inside the body.

In some embodiments, the 3D display content may be generated by the 3D display module that is arranged at the main control chip and controlled by a device other than the main control chip according to the images acquired in the 3D shooting manner and the eye positions. Optionally, the images acquired in the 3D shooting manner may be taken as the to-be-displayed image.

In some embodiments, the 3D display module may be controlled by a device other than the main control chip, whether the 3D display module is arranged at the main control chip or at a position other than the main control chip. Optionally, the 3D display module may be controlled by the above at least two black-and-white cameras or an image acquisition camera module containing the above at least two black-and-white cameras.

In some embodiments, the 3D display module may also be controlled by the 3D display screen or other devices of the 3D display terminal according to actual application scenarios, preset strategies and the like.

In some embodiments, generating 3D display content by a 3D display module may comprise:
generating the 3D display content by the 3D display module triggered or started by a device other than the main control chip according to the images acquired in the 3D shooting manner and the eye positions.

Optionally, the 3D display module may be triggered or started by the above at least two black-and-white cameras, the image acquisition camera module, the 3D display screen or other devices. The 3D display module may be triggered or started in various manners, for example, the 3D display module is triggered or started in a manner of electric pulses, digital signals or the like.

In some embodiments, the above at least two black-and-white cameras, the image acquisition camera module or the 3D display screen may transmit the electric pulses, the digital signals and the like to the 3D display module; and the 3D display module is triggered or started after the electric pulses and the digital signals are received.

In some embodiments, the image acquisition camera module may also comprise at least one color camera. Optionally, the image acquisition camera module may also comprise at least one TOF camera. Whether the image acquisition camera module comprises the black-and-white camera, the color camera or the TOF camera, at least two cameras contained in the image acquisition camera module may be applied to acquire the images of the second shooting object comprising eye positions of the user.

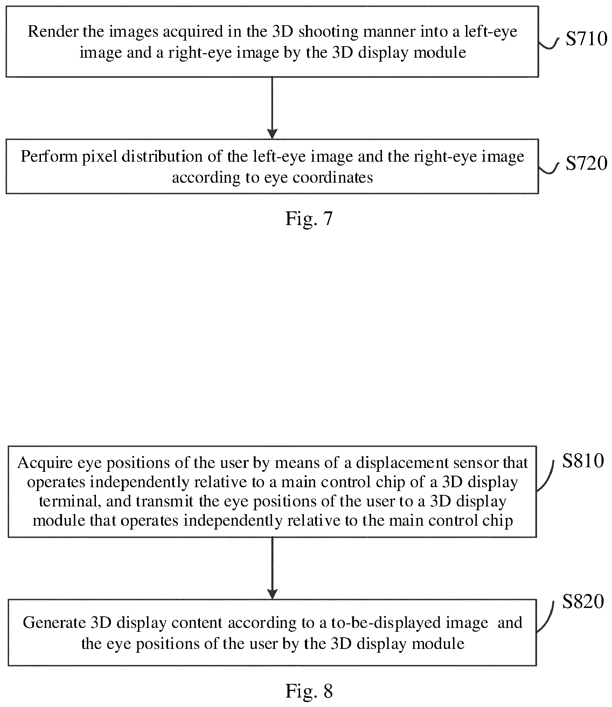

Referring to Fig. 7, in some embodiments, generating 3D display content by the 3D display module may comprise:
S710: rendering the images acquired in the 3D shooting manner into a left-eye image and a right-eye image by the 3D display module; and
S720: performing pixel distribution of the left-eye image and the right-eye image according to eye coordinates.

In some embodiments, performing pixel distribution of the left-eye image and the right-eye image according to eye coordinates may comprise:
distributing the left-eye image and the right-eye image to the pixels, corresponding to the eye coordinates, of the 3D display screen of the 3D display terminal.

In some embodiments, a viewpoint matched with the eye positions may be selected from a plurality of viewpoints of the 3D display terminal; the to-be-displayed image (such as the images acquired in the 3D shooting manner) is rendered into a left-eye image and a right-eye image matched with the angle of the viewpoint; and the left-eye image and the right-eye image are distributed to corresponding pixels of the 3D display screen of the 3D display terminal according to the angle of the viewpoint, to support the 3D display.

Optionally, the eye positions may be the eye coordinates.

In some embodiments, the method for realizing 3D display may further comprise: displaying 3D display content through the 3D display screen of the 3D display terminal.

Referring to Fig. 8, embodiments of the present disclosure provide a method for realizing 3D display, comprising:
S810: acquiring eye positions of the user by means of a displacement sensor 105 that operates independently relative to a main control chip of the 3D display terminal, transmitting the eye positions of the user to a 3D display module 103 that operates independently relative to the main control chip; and
S820: generating 3D display content according to a to-be-displayed image and the eye positions of the user by the 3D display module 103.

In some embodiments, acquiring the eye positions of the user by means of a displacement sensor 105 may comprise:
acquiring the eye positions of the user by means of the displacement sensor 105 that is arranged at a position other than the main control chip and controlled by a device other than the main control chip.

Optionally, the displacement sensor 105 may be arranged inside the body of the 3D display terminal. Optionally, the displacement sensor 105 is arranged at the body of the 3D display terminal and located inside the body.

In some embodiments, acquiring the eye positions of the user by means of the displacement sensor 105 may comprise:
acquiring the eye positions of the user by means of the displacement sensor 105 that is arranged at the main control chip and controlled by a device other than the main control chip.

In some embodiments, the displacement sensor 105 may be controlled by a device other than the main control chip, whether the displacement sensor is arranged at the main control chip or at a position other than the main control chip.

In some embodiments, the displacement sensor 105 may also be controlled by a 3D display screen 108 or other devices of the 3D display terminal according to actual application scenarios, preset strategies and the like.

In some embodiments, acquiring eye positions of the user by means of a displacement sensor 105 may comprise:
acquiring the eye positions of the user by means of the displacement sensor 105 triggered or started by a device other than the main control chip.

In some embodiments, the method may further comprise acquiring images of a shooting object comprising the eye positions of the user.

In some embodiments, acquiring images of a shooting object may comprise:
acquiring the images of the shooting object by a camera module 102.

In some embodiments, acquiring the images of the shooting object by a camera module 102 may comprise:
acquiring the images of the shooting object by at least two cameras.

In some embodiments, acquiring the images of the shooting object by at least two cameras may comprise:
acquiring black-and-white images of the shooting object by at least two black-and-white cameras.

In some embodiments, the displacement sensor 105 may be controlled by the above at least two black-and-white cameras or the image acquisition camera module 102 containing the above at least two black-and-white cameras.

Optionally, the displacement sensor 105 may be triggered or started by the above at least two black-and-white cameras, the image acquisition camera module 102, the 3D display screen 108 or other devices. The displacement sensor 105 may be triggered or started in various manners, for example, the displacement sensor 105 is triggered or started in a manner of electric pulses, digital signals or the like.

In some embodiments, the above at least two black-and-white cameras, the camera module 102 or the 3D display screen 108 may transmit the electric pulses, the digital signals and the like to the displacement sensor 105; and the displacement sensor 105 is triggered or started after the electric pulses and the digital signals are received.

In some embodiments, acquiring eye positions of the user may comprise:
acquiring eye coordinates of eyes of the user by obtaining eye depth information according to eye plane position information contained in the images of the shooting object.

Optionally, the eye coordinates of eyes of the user may be space coordinates of eyes of the user.

In some embodiments, the black-and-white images obtained by the black-and-white cameras contain the eye plane position information. Optionally, the eye plane position information contained in a black-and-white image obtained by compositing at least two corresponding black-and-white images acquired by at least two black-and-white cameras with different shooting angles contains eye depth information, so that the eye depth information may be obtained according to the eye plane position information contained in the black-and-white image, and the eye depth information may be converted into the eye coordinates of eyes of the user.

In some embodiments, generating the 3D display content according to the to-be-displayed image and the eye positions by the 3D display module 103 may comprise:
generating the 3D display content according to the to-be-displayed image and the eye positions by the 3D display module 103 that is arranged at a position other than the main control chip and controlled by a device other than the main control chip.

Optionally, the 3D display module 103 may be arranged inside the body of the 3D display terminal. Optionally, the 3D display module 103 is arranged at the body of the 3D display terminal and located inside the body.

In some embodiments, the 3D display content may be generated by the 3D display module 103 that is arranged at the main control chip and controlled by a device other than the main control chip according to the to-be-displayed image and the eye positions.

In some embodiments, the 3D display module 103 may be controlled by a device other than the main control chip, whether the 3D display module is arranged at the main control chip or at a position other than the main control chip. Optionally, the 3D display module 103 may be controlled by the above at least two black-and-white cameras or the image acquisition camera module 102 containing the above at least two black-and-white cameras.

In some embodiments, the 3D display module 103 may also be controlled by the 3D display screen 108 or other devices of the 3D display terminal according to actual application scenarios, preset strategies and the like.

In some embodiments, generating the 3D display content according to the to-be-displayed image and the eye positions by the 3D display module 103 may comprise:
generating the 3D display content according to the to-be-displayed image and the eye positions by the 3D display module 103 triggered or started by a device other than the main control chip.

Optionally, the 3D display module 103 may be triggered or started by the above at least two black-and-white cameras, the camera module 102, the 3D display screen 108 or other devices. The 3D display module 103 may be triggered or started in various manners, for example, the 3D display module 103 is triggered or started in a manner of electric pulses, digital signals or the like.

In some embodiments, the above at least two black-and-white cameras, the camera module 102 or the 3D display screen 108 may transmit the electric pulses, the digital signals and the like to the 3D display module 103; and the 3D display module 103 is triggered or started after the electric pulses and the digital signals are received.

In some embodiments, the camera module 102 may also comprise at least one color camera. Optionally, the camera module 102 may also comprise at least one TOF camera. Whether the image acquisition camera module comprises the black-and-white camera, the color camera or the TOF camera, at least two cameras contained in the camera module 102 may be applied to acquire the images of the shooting object comprising the eye positions of the user.

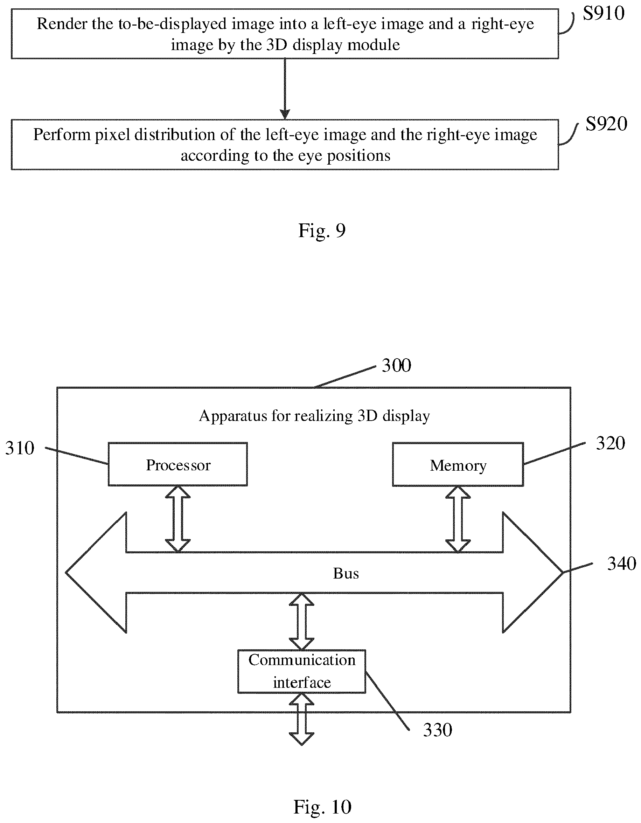

Referring to Fig. 9, in some embodiments, generating the 3D display content according to the to-be-displayed image and the eye positions by the 3D display module 103 may comprise:
S910: rendering the to-be-displayed image into a left-eye image and a right-eye image by the 3D display module 103; and
S920: performing pixel distribution of the left-eye image and the right-eye image according to the eye positions.

In some embodiments, performing pixel distribution of the left-eye image and the right-eye image according to the eye positions may comprise: distributing the left-eye image and the right-eye image to the pixels, corresponding to the eye positions, of the 3D display screen 108 of the 3D display terminal.

In some embodiments, a viewpoint matched with the eye positions may be selected from a plurality of viewpoints of the 3D display terminal; the to-be-displayed image is rendered into a left-eye image and a right-eye image matched with the angle of the viewpoint; and the left-eye image and the right-eye image are distributed to corresponding pixels of the 3D display screen 108 of the 3D display terminal according to the angle of the viewpoint, to support the 3D display.

Optionally, the eye positions may be the eye coordinates.

In some embodiments, the method for realizing 3D display may further comprise: displaying 3D display content through the 3D display screen 108 of the 3D display terminal.

Embodiments of the present disclosure provide an apparatus 300 for realizing 3D display, comprising a processor and a memory storing program instructions; and the processor is configured to perform the method for realizing 3D display when the program instructions are performed.

In some embodiments, as shown in Fig. 10, an apparatus 300 for realizing 3D display comprises:
a processor 310 and a memory 320, and may further comprise a communication interface 330 and a bus 340, wherein the processor 310, the communication interface 330 and the memory 320 may communicate with each other through the bus 340. The communication interface 330 may be used for transmitting information. The processor 310 may be used for calling logic instructions in the memory 320 to perform the method for realizing 3D display in the above embodiments.

In addition, the logic instructions in the memory 320 may be implemented in the form of software functional units, and may be stored in a computer-readable storage medium when the logic instructions are sold or used as an independent product.

The memory 320, as a computer-readable storage medium, may be used for storing software programs and computer-executable programs, such as program instructions/modules corresponding to the methods in the embodiments of the present disclosure. The processor 310 performs the functional application and data processing by running the program instructions/modules stored in the memory 320, i.e., implements the methods for realizing 3D display in the above embodiments of the methods.

The memory 320 may comprise a storage program region and a storage data region, wherein the storage program region may store an operating system and at least one application program required by the functions; and the storage data region may store data and the like created according to the use of terminal equipment. In addition, the memory 320 may comprise a high-speed random access memory (RAM) and a nonvolatile memory (NVM).

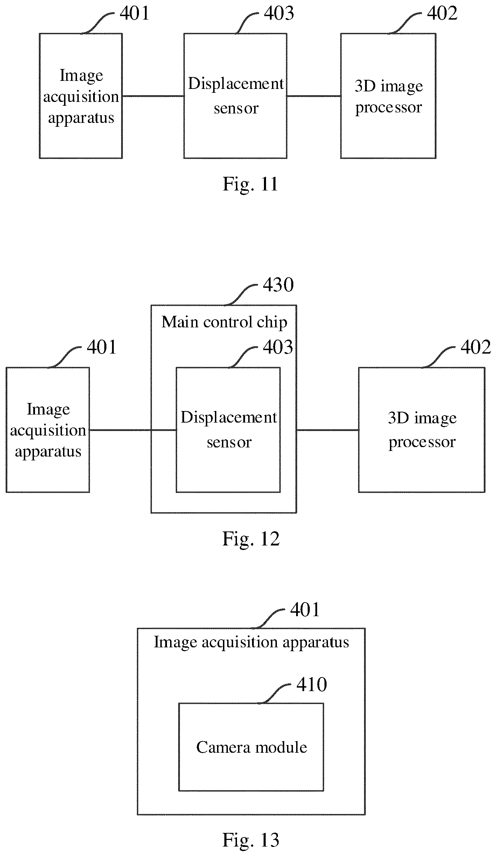

Referring to Fig. 11, embodiments of the present disclosure provide an apparatus 400 for realizing 3D display, comprising:
an image acquisition apparatus 401, which is configured to acquire an image having eye space information of a user;
a displacement sensor 403, which operates independently relative to a main control chip of a 3D display terminal and is configured to acquire eye positions of the user according to the image having the eye space information of the user; and
a 3D image processor 402, which is configured to determine 3D display content according to the eye positions of the user.

In some embodiments, the displacement sensor 403 may be arranged at a position other than the main control chip and configured to be controlled by a device other than the main control chip.

Optionally, the displacement sensor 403 may be arranged inside the body of the 3D display terminal. Optionally, the displacement sensor 403 is arranged at the body of the 3D display terminal and located inside the body.

Referring to Fig. 12, in some embodiments, the displacement sensor 403 may be arranged at the main control chip 430 and configured to be controlled by a device other than the main control chip 430.

In some embodiments, the displacement sensor 403 may be controlled by a device other than the main control chip 430, whether the displacement sensor 403 is arranged at the main control chip 430 or at a position other than the main control chip 430. Optionally, the displacement sensor 403 may be controlled by a black-and-white camera module or at least two black-and-white cameras contained in the black-and-white camera module.

In some embodiments, the displacement sensor 403 may also be controlled by the 3D display screen or other devices of the 3D display terminal according to actual application scenarios, preset strategies and the like.

In some embodiments, the displacement sensor 403 may be configured to be triggered or started by a device other than the main control chip 430.

Optionally, the displacement sensor 403 may be triggered or started by the above at least two black-and-white cameras, the black-and-white camera module, the 3D display screen or other devices. The displacement sensor 403 may be triggered or started in various manners, for example, the displacement sensor 403 is triggered or started in a manner of electric pulses, digital signals or the like.

In some embodiments, the at least two black-and-white cameras, the black-and-white camera module or the 3D display screen may transmit the electric pulses, the digital signals and the like to the displacement sensor 403; and the displacement sensor 403 is triggered or started after the electric pulses and the digital signals are received.

In some embodiments, similar to the displacement sensor 403, the 3D image processor 402 may operate independently relative to the main control chip 430 of the 3D display terminal. Optionally, the 3D image processor 402 may be arranged at a position other than the main control chip 430 and controlled by a device other than the main control chip 430. Optionally, the 3D image processor 402 may be triggered or started by a device other than the main control chip 430.

In some embodiments, the displacement sensor 403 may be configured to:
acquire space coordinates of eyes of the user by obtaining eye depth information according to eye plane position information contained in the image having the eye space information of the user.

In some embodiments, the image having the eye space information of the user may be acquired by the black-and-white camera module comprising at least two black-and-white cameras; and the image contains eye plane position information. Optionally, the eye plane position information contained in a black-and-white image obtained by compositing at least two corresponding black-and-white images acquired by at least two black-and-white cameras with different shooting angles contains the eye depth information, so that the eye depth information may be obtained according to the eye plane position information contained in the black-and-white image by means of the displacement sensor 403, and the eye depth information may be converted into the space coordinates of eyes of the user.

In some embodiments, the 3D image processor 402 may be configured to:
render the to-be-displayed image into a left-eye image and a right-eye image, and
perform pixel distribution of the left-eye image and the right-eye image on the 3D display screen of the 3D display terminal according to eye coordinates.

In some embodiments, the 3D image processor 402 may be configured to:
distribute the left-eye image and the right-eye image to the pixels, corresponding to the eye coordinates, of the 3D display screen.

In some embodiments, the 3D image processor 402 may be configured to: select a viewpoint matched with the eye coordinates from a plurality of viewpoints of the 3D display terminal, render the to-be-displayed image into a left-eye image and a right-eye image matched with the angle of the viewpoint, and distribute the left-eye image and the right-eye image to corresponding pixels of the 3D display screen of the 3D display terminal according to the angle of the viewpoint, to support the 3D display.

Referring to Fig. 13, in some embodiments, the image acquisition apparatus 401 may comprise a camera module 410. Optionally, the camera module 410 may be configured to acquire the image having eye space information of the user.

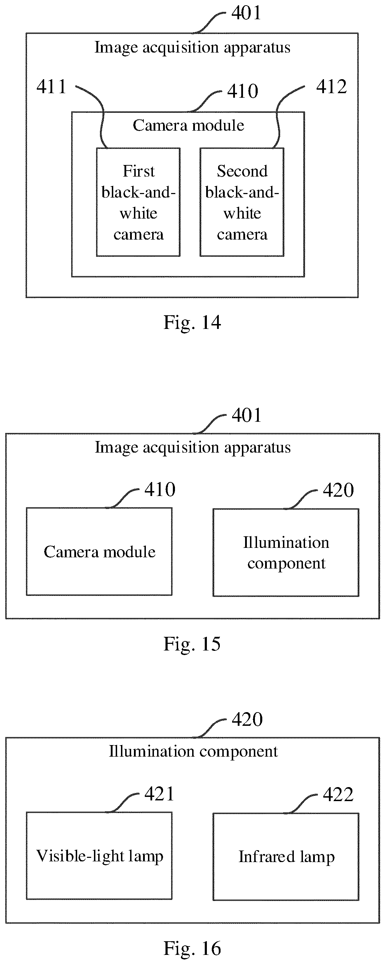

Referring to Fig. 14, in some embodiments, the camera module 410 may comprise at least two black-and-white cameras: a first black-and-white camera 411 and a second black-and-white camera 412. Optionally, the first black-and-white camera 411 and the second black-and-white camera 412 are configured to acquire black-and-white images having eye space information of the user.

In some embodiments, the image having the eye space information of the user may be acquired by the first black-and-white camera 411 and the second black-and-white camera 412; and the image contains the eye plane position information. Optionally, the eye plane position information contained in an black-and-white image acquired by compositing two corresponding black-and-white images obtained by the first black-and-white camera 411 and the second black-and-white camera 412 with different shooting angles contains the eye depth information, so that the eye depth information may be obtained according to the eye plane position information contained in the black-and-white image by means of the displacement sensor 403, and the eye depth information may be converted into the space coordinates of eyes of the user.

In some embodiments, the above at least two black-and-white cameras may use optical lenses and sensor chips with the same performance indexes. Optionally, the first black-and-white camera 411 and the second black-and-white camera 412 may use optical lenses and sensor chips with the same performance indexes.

Referring to Fig. 15, in some embodiments, the image acquisition apparatus 401 may further comprise an illumination component 420. Optionally, the illumination component 420 is configured to provide illumination when acquiring images.

Referring to Fig. 16, in some embodiments, the illumination component 420 may comprise at least one of:
a visible-light lamp 421 and an infrared lamp 422.

In some embodiments, the illumination component 420 may be turned on or off according to the triggering of devices such as the image acquisition apparatus 401 or the camera module 410. Optionally, devices such as the image acquisition apparatus 401 or the camera module 410 may control at least one of the visible-light lamp 421 and the infrared lamp 422 according to actual situations or preset strategies, to turn on or off at least one of the visible-light lamp 421 and the infrared lamp 422.

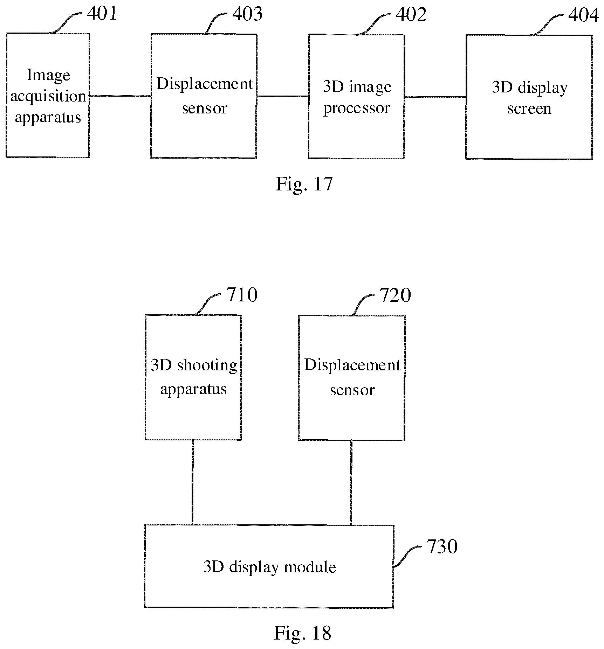

Referring to Fig. 17, in some embodiments, the apparatus 400 for realizing 3D display may further comprise:
a 3D display screen 404, which is configured to display the 3D display content.

Optionally, the 3D display screen 404 may be connected with the 3D image processor 402 or the displacement sensor 403, to receive the to-be-displayed image for realizing the 3D display.

Referring to Fig. 18, embodiments of the present disclosure provide an apparatus 700 for realizing 3D display, comprising:
a 3D shooting apparatus 710, which is configured to acquire images in a 3D shooting manner;
a displacement sensor 720, which operates independently relative to a main control chip of the 3D display terminal and is configured to position the eyes of the user; and
a 3D display module 730, which is configured to generate 3D display content according to the images acquired in the 3D shooting manner and the results of eye positioning.

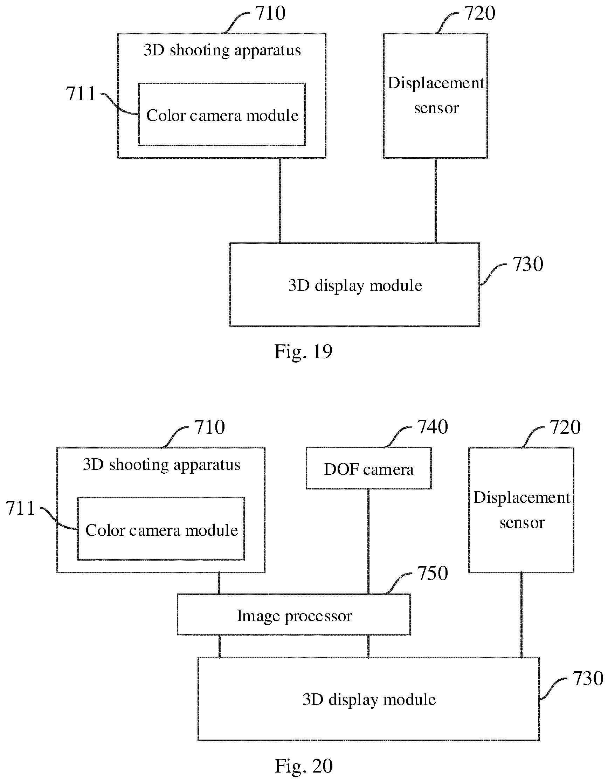

Referring to Fig. 19, in some embodiments, the 3D shooting apparatus 710 may comprise a color camera module 711, which is provided with at least two color cameras and is configured to acquire color images containing parallax;
and/or,
the displacement sensor 720, which may be configured to acquire eye positions of the user.

In some embodiments, the displacement sensor 720 may also transmit the eye positions of the user to the 3D display module 730 that operates independently relative to the main control chip.

Referring to Fig. 20, in some embodiments, the apparatus 700 for realizing 3D display may further comprise:
a DOF camera 740, which is configured to acquire first DOF information of a first shooting object; and
an image processor 750, which is configured to adjust second DOF information in a color image according to the first DOF information;
wherein the color image is a color image of the first shooting object that can be adjusted according to the first DOF information.

In some embodiments, the DOF camera 740 may communicate with the color camera module 711, to receive and transmit the shot or processed images and other contents.

In some embodiments, the image processor 750 may be configured to:
adjust the DOFs of corresponding pixels contained in the second DOF information based on the DOFs of the pixels contained in the first DOF information, so that a difference between the DOFs of corresponding pixels contained in the second DOF information and the DOFs of the pixels contained in the first DOF information is reduced.

In comparison, the color images acquired by the above at least two color cameras have high resolution and low accuracy of DOF, while the first DOF information (which may be presented in the form of DOF images) acquired by the DOF camera 740 has low resolution and high accuracy of DOF. Therefore, the image processor 750 may be configured to adjust the DOFs of corresponding pixels contained in the second DOF information based on the DOFs of the pixels contained in the first DOF information, so that the DOFs of corresponding pixels contained in the second DOF information may approach the DOFs of corresponding pixels contained in the first DOF information, to reduce the difference between the DOFs of corresponding pixels contained in the second DOF information and the DOFs of corresponding pixels contained in the first DOF information, and effectively improve the accuracy of the DOFs of corresponding pixels contained in the second DOF information.

In some embodiments, before the image processor 750 is configured to adjust the DOFs of corresponding pixels contained in the second DOF information based on the DOFs of the pixels contained in the first DOF information (DOF image), the sizes of the DOF image and the color image may be unified first; and then, characteristic values of the DOF image and the color image are captured and matched on the basis of an FOV between the DOF camera 740 and the color camera, so that the pixels in the DOF image correspond to corresponding pixels in the color image in pixels; and in this way, the DOFs of the pixels in the DOF image may be compared with the DOFs of corresponding pixels in the color image, and the DOF may be adjusted according to the comparison result.

In some embodiments, the image processor 750 may be configured to:
adjust the DOFs of corresponding pixels contained in the second DOF information to the DOFs of the pixels contained in the first DOF information in proportion; or
adjust the DOFs of corresponding pixels contained in the second DOF information as the DOFs of the pixels contained in the first DOF information.

In some embodiments, the image processor 750 may be configured to adjust the DOFs of corresponding pixels contained in the second DOF information to the DOFs of the pixels contained in the first DOF information based on the difference between the DOFs of corresponding pixels contained in the second DOF information and the DOFs of the pixels contained in the first DOF information according to a certain proportion of the difference. For example, if the difference between the DOFs of corresponding pixels contained in the second DOF information and the DOFs of the pixels contained in the first DOF information is 5 cm, the image processor 750 may be configured to adjust the DOFs of corresponding pixels contained in the second DOF information by 10%, 20%, 30%, 50%, 80% and the like of 5 cm, i.e., 5 mm, 1 cm, 1.5 cm, 2.5 cm, 4 cm and the like, to the DOFs of the pixels contained in the first DOF information according to actual situations, preset strategies or other operating manners.

In some embodiments, the image processor 750 may also be configured to directly adjust the DOFs of corresponding pixels contained in the second DOF information may to the DOFs of the pixels contained in the first DOF information. For example, if the difference between the DOFs of corresponding pixels contained in the second DOF information and the DOFs of the pixels contained in the first DOF information is 5 cm, the image processor 750 may be configured to directly adjust the DOFs of corresponding pixels contained in the second DOF information by 5 cm to the DOFs of the pixels contained in the first DOF information according to the actual situations, the preset strategies or other operating manners.

When the DOF is adjusted as above, since the resolution of the first DOF information acquired by the DOF camera 740 is low, all pixels in the DOF image may only correspond to some pixels in the color image, so that the DOF of some or all pixels, other than corresponding pixels, contained in the second DOF information may not be effectively adjusted. In such a case, in some embodiments, the image processor 750 may further be configured to: adjust the DOF of pixels, other than corresponding pixels, contained in the second DOF information based on the DOF of pixels contained in the first DOF information, to effectively adjust the DOF of pixels, other than corresponding pixels, contained in the second DOF information and effectively improve the accuracy of DOF.

In some embodiments, the image processor 750 may be configured to:
adjust the DOF of pixels, other than corresponding pixels, contained in the second DOF information to the DOF of pixels contained in the first DOF information in proportion in a preset region; or
adjust the DOF of pixels, other than corresponding pixels, contained in the second DOF information as the DOF of pixels contained in the first DOF information in the preset region.

In some embodiments, the preset region may be set according to the actual situations or the preset strategies or other operating manners. Optionally, the preset region may comprise a single corresponding pixel in the second DOF information and non-corresponding pixels around the single corresponding pixel (i.e.: the second DOF information has no pixel corresponding to the pixels in the first DOF information), for example, the preset region may be a circular region formed by taking the single corresponding pixel as the center and taking other values such as half of the distance between the single corresponding pixel and another adjacent single corresponding pixel as the radius. Optionally, different preset regions may not be overlapped, to avoid possible pixel adjustment conflicts.

Optionally, the preset region may further comprise at least two corresponding pixels in the second DOF information and non-corresponding pixels around the two corresponding pixels, for example, when the DOFs of the above at least two corresponding pixels are adjusted by the same amount, the preset region may be a circular region formed by taking a mid-point of the two corresponding pixels as the center and taking a greater value such as half of the distance between the two corresponding pixels as the radius. Optionally, different preset regions may be overlapped, as long as the possible pixel adjustment conflicts can be avoided.

Optionally, the size and shape of the preset region may also be different according to the actual situations, the preset strategies or other operating manners, for example, the preset region may be scaled up or down, and the preset region may be oval, polygonal or the like.

In some embodiments, when the DOF is adjusted in the preset region, the image processor 750 may be configured to adjust the DOFs of corresponding pixels contained in the second DOF information to the DOFs of the pixels contained in the first DOF information based on the difference between the DOFs of corresponding pixels contained in the second DOF information and the DOFs of the pixels contained in the first DOF information according to a certain proportion of the difference. For example, if the difference between the DOFs of corresponding pixels contained in the second DOF information and the DOFs of the pixels contained in the first DOF information is 5 cm, the image processor 750 may be configured to adjust the DOFs of corresponding pixels contained in the second DOF information by 10%, 20%, 30%, 50%, 80% and the like of 5 cm, i.e.: 5 mm, 1 cm, 1.5 cm, 2.5 cm, 4 cm and the like, to the DOFs of the pixels contained in the first DOF information according to actual situations, preset strategies or other operating manners.

In some embodiments, when the DOF is adjusted in the preset region, the image processor 750 may also be configured to directly adjust the DOFs of corresponding pixels contained in the second DOF information to the DOFs of the pixels contained in the first DOF information. For example, if the difference between the DOFs of corresponding pixels contained in the second DOF information and the DOFs of the pixels contained in the first DOF information is 5 cm, the image processor 750 may be configured to directly adjust the DOFs of corresponding pixels contained in the second DOF information by 5 cm to the DOFs of the pixels contained in the first DOF information according to the actual situations, the preset strategies or other operating manners.

In some embodiments, the DOF camera 740 may be configured to: acquire the first DOF information of the first shooting object containing the DOF of pixels.

In some embodiments, the above at least two color cameras may acquire at least two corresponding color images. In such a case, the image processor 750 may be configured to adjust the DOFs of some or all color images as above. For example, the DOF of one color image, the DOFs of two color images, or the DOFs of all color images are adjusted.

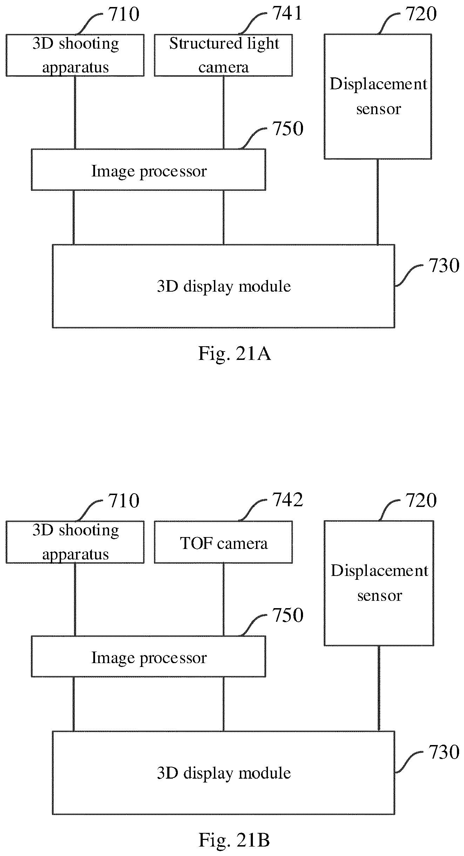

Referring to Fig. 21A, in some embodiments, the DOF camera 740 may be: a structured light camera 741.

Referring to Fig. 21B, in some embodiments, the DOF camera 740 may be: a TOF camera 742.

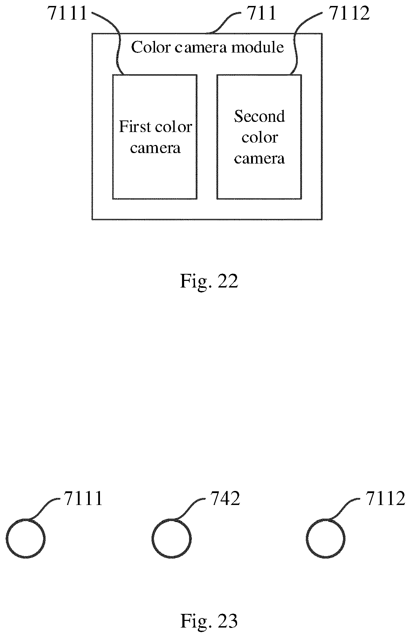

Referring to Fig. 22, in some embodiments, the color camera module 711 may comprise:
a first color camera 7111, which is configured to acquire a first color image;
a second color camera 7112, which is configured to acquire a second color image; and
an image processor 750, which may be configured to:
   composite the first color image and the second color image into a color compositing image containing the second DOF information according to spacing and shooting angles of the first color camera 7111 and the second color camera 7112.

In some embodiments, the color compositing image may comprise a left half image and a right half image;
wherein the left half image is a color image, and the right half image is a DOF image.

In some embodiments, the first color camera 7111 and the second color camera 7112 may be the same color camera. Optionally, the first color camera 7111 and the second color camera 7112 may also be different color cameras. In such a case, in order to successfully composite the color compositing image, the first color image and the second color image may be calibrated and corrected.

In some embodiments, the color camera module 711 may also be configured to acquire the color compositing image of the first shooting object by at least two color cameras in other feasible modes than that shown in Fig. 19. Optionally, the color camera module 711 may also be configured to acquire the color compositing image on the basis of parameters other than the spacing and the shooting angles. Optionally, more than two color cameras may be used when the color camera module 711 is configured to acquire the color compositing image, for example, three or more color cameras, as long as the color compositing image can be successfully composited.

In some embodiments, in addition to the color cameras, the color camera module 711 may also comprise a controller capable of controlling the color cameras, to effectively control the operation of the color cameras and successfully realize the compositing of the color compositing image.

In some embodiments, the image processor 750 may further be configured to: perform 3D display on the adjusted color compositing image. Various 3D display modes are feasible and will not be repeated here, as long as the image processor 750 can successfully perform the 3D display on the color compositing image with adjusted DOF.

In some embodiments, the image processor 750 may be a 3D image processor based on a high-speed computing chip such as a central processing unit (CPU), a field programmable gate array (FPGA), an application specific integrated circuit (ASIC) or the like. Optionally, the 3D image processor may be presented in the form of a chip, a single chip microcomputer or the like.

Referring to Fig. 23, in some embodiments, the DOF camera 740 may be a TOF camera 742, and the TOF camera 742 may be located between the first color camera 7111 and the second color camera 7112. Optionally, the position of the TOF camera 742 between the first color camera 7111 and the second color camera 7112 may be set according to the actual situations or preset strategies or other operating manners, for example, the TOF camera 742 may be located between the first color camera 7111 and the second color camera 7112, or the TOF camera 742 may be located at other positions between the first color camera 7111 and the second color camera 7112. Optionally, the DOF camera 740 may also be the structured light camera 741, and the structured light camera 741 may be located between the first color camera 7111 and the second color camera 7112.

In some embodiments, the TOF camera 742 may be located on a connecting line between the first color camera 7111 and the second color camera 7112, or the TOF camera 742 may be located at a position other than the connecting line between the first color camera 7111 and the second color camera 7112, as long as the TOF camera 742 is located between the first color camera 7111 and the second color camera 7112 and may support the adjustment of the DOF.

In some embodiments, the displacement sensor 720 may be arranged at a position other than the main control chip and configured to be controlled by a device other than the main control chip.

Optionally, the displacement sensor 720 may be arranged inside the body of the 3D display terminal. Optionally, the displacement sensor 720 is arranged at the body of the 3D display terminal and located inside the body.

In some embodiments, the displacement sensor 720 may be arranged at the main control chip and configured to be controlled by a device other than the main control chip.

In some embodiments, the displacement sensor 720 may be controlled by a device other than the main control chip, whether the displacement sensor 720 is arranged at the main control chip or at a position other than the main control chip.

In some embodiments, the displacement sensor 720 may also be controlled by a 3D display screen or other devices of the 3D display terminal according to actual application scenarios, preset strategies and the like.

In some embodiments, the displacement sensor 720 may be configured to be triggered or started by a device other than the main control chip.

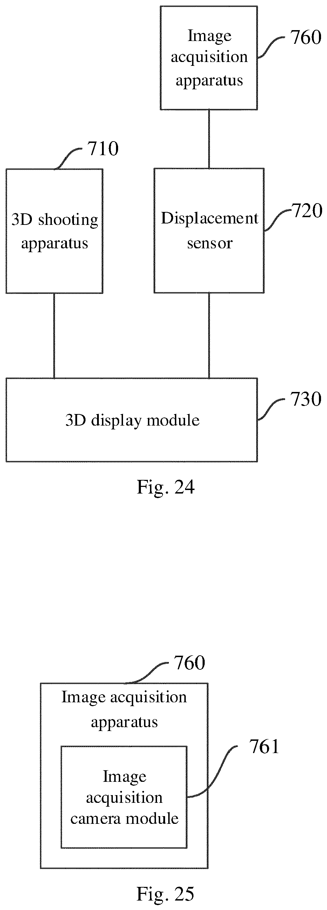

Referring to Fig. 24, in some embodiments, the apparatus 700 for realizing 3D display may further comprise: an image acquisition apparatus 760, which is configured to acquire images of a second object comprising the eye positions of the user.

Referring to Fig. 25, in some embodiments, the image acquisition apparatus 760 may comprise:
an image acquisition camera module 761, which is configured to acquire the images of the second shooting object.

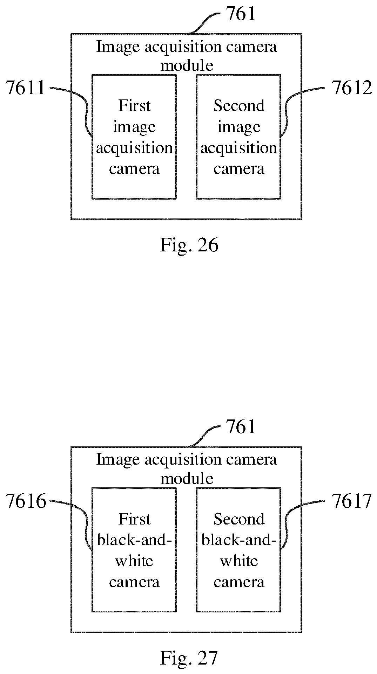

Referring to Fig. 26, in some embodiments, the image acquisition camera module 761 may comprise:
at least two image acquisition cameras: a first image acquisition camera 7611 and a second image acquisition camera 7612, which are configured to acquire the images of the second shooting object.

Referring to Fig. 27, in some embodiments, at least two image acquisition cameras may comprise:
at least two black-and-white cameras, which are configured to acquire black-and-white images of the second shooting object.

In some embodiments, the above at least two black-and-white cameras may comprise a first black-and-white camera 7616 and a second black-and-white camera 7617, which are respectively configured to acquire the black-and-white images of the second shooting object.

In some embodiments, the displacement sensor 720 may be controlled by the above at least two black-and-white cameras or the image acquisition camera module 761 containing the at least two black-and-white cameras.

Optionally, the displacement sensor 720 may be triggered or started by the above at least two black-and-white cameras, the image acquisition camera module 761, the 3D display screen or other devices. The displacement sensor 720 may be triggered or started in various manners, for example, the displacement sensor 720 is triggered or started in a manner of electric pulses, digital signals or the like.

In some embodiments, the at least two black-and-white cameras, the image acquisition camera module 761 or the 3D display screen may transmit the electric pulses, the digital signals and the like to the displacement sensor 720; and the displacement sensor 720 is triggered or started after the electric pulses and the digital signals are received.

In some embodiments, the displacement sensor 720 may be configured to:
acquire eye coordinates of eyes of the user by obtaining eye depth information according to eye plane position information contained in the images of the second shooting object.

Optionally, the eye coordinates of eyes of the user may be space coordinates of eyes of the user.

In some embodiments, the black-and-white images obtained by the black-and-white cameras contain the eye plane position information. Optionally, the eye plane position information contained in a black-and-white image obtained by compositing at least two corresponding black-and-white images acquired by at least two black-and-white cameras with different shooting angles by means of the displacement sensor 720 contains eye depth information, so that the eye depth information may be obtained according to the eye plane position information contained in the black-and-white image, and the eye depth information may be converted into the eye coordinates of eyes of the user.

In some embodiments, the 3D display module 730 may operate independently relative to the main control chip, and is configured to generate 3D display content according to images acquired in a 3D shooting manner and the eye positions of the user.

In some embodiments, the 3D display module 730 may be arranged at a position other than the main control chip and configured to be controlled by a device other than the main control chip.

Optionally, the 3D display module 730 may be arranged inside the body of the 3D display terminal. Optionally, the 3D display module 730 is arranged at the body of the 3D display terminal and located inside the body.

In some embodiments, the 3D display module 730 may be arranged at the main control chip and configured to be controlled by a device other than the main control chip.

In some embodiments, the 3D display module 730 may be controlled by a device other than the main control chip, whether the 3D display module 730 is arranged at the main control chip or at a position other than the main control chip. Optionally, the 3D display module 730 may be controlled by the above at least two black-and-white cameras or the image acquisition camera module 761 containing the above at least two black-and-white cameras.

In some embodiments, the 3D display module 730 may also be controlled by the 3D display screen or other devices of the 3D display terminal according to actual application scenarios, preset strategies and the like.

In some embodiments, the 3D display module 730 may be configured to be triggered or started by a device other than the main control chip.

Optionally, the 3D display module 730 may be triggered or started by the above at least two black-and-white cameras, the image acquisition camera module 761, the 3D display screen or other devices. The 3D display module 730 may be triggered or started in various manners, for example, the displacement sensor 730 is triggered or started in a manner of electric pulses, digital signals or the like.

In some embodiments, the above at least two black-and-white cameras, the image acquisition camera module 761 or the 3D display screen may transmit the electric pulses, the digital signals and the like to the 3D display module 730; and the 3D display module 730 is triggered or started after the electric pulses and the digital signals are received.

In some embodiments, the image acquisition camera module 761 may also comprise at least one color camera. Optionally, the image acquisition camera module 761 may also comprise at least one TOF camera 742. Whether the image acquisition camera module 761 comprises the black-and-white camera, the color camera or the TOF camera 742, at least two cameras contained in the image acquisition camera module 761 may be applied to acquire the images of the second shooting object comprising eye positions of the user.

In some embodiments, the 3D display module 730 may be configured to:
render the images acquired in the 3D shooting manner into a left-eye image and a right-eye image, and perform pixel distribution of the left-eye image and the right-eye image according to eye coordinates.

In some embodiments, the 3D display module 730 may be configured to:
distribute the left-eye image and the right-eye image to the pixels, corresponding to the eye coordinates, of the 3D display screen of the 3D display terminal.

In some embodiments, the 3D display module 730 may be configured to: select a viewpoint matched with the eye positions from a plurality of viewpoints of the 3D display terminal, render the to-be-displayed image (such as the images acquired in the 3D shooting manner) into a left-eye image and a right-eye image matched with the angle of the viewpoint, and distribute the left-eye image and the right-eye image to corresponding pixels of the 3D display screen of the 3D display terminal according to the angle of the viewpoint, to support the 3D display.

Optionally, the eye positions may be the eye coordinates.

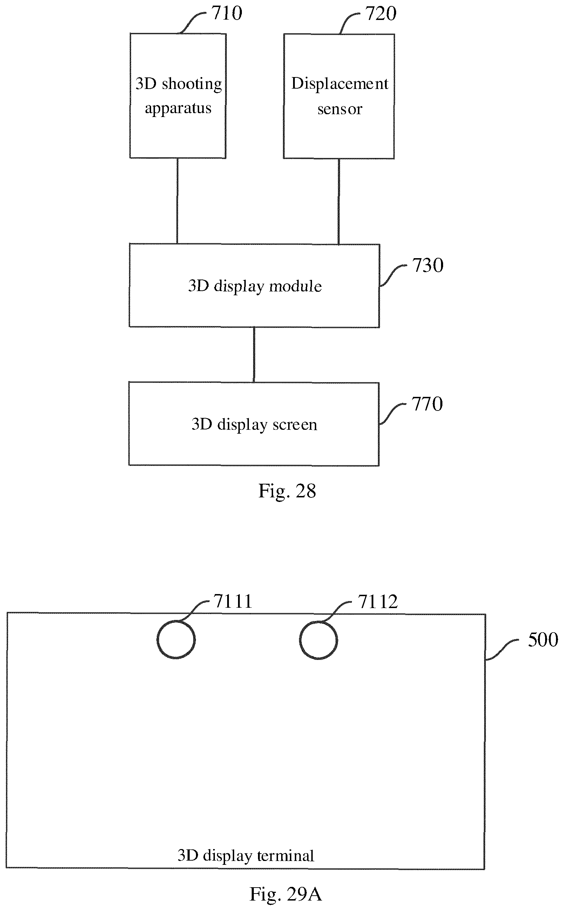

Referring to Fig. 28, in some embodiments, the apparatus 700 for realizing 3D display may further comprise:
a 3D display screen 770, which is configured to display the 3D display content.

Optionally, the 3D display screen 770 may be connected with the 3D display module 730, to receive the to-be-displayed image (such as the images acquired in the 3D shooting manner) for realizing the 3D display. Optionally, the 3D display screen 770 may also be connected with the displacement sensor 720, to receive the eye positions of the user acquired by the displacement sensor 720, to support the 3D display.

In some embodiments, the displacement sensor 720 may be a 3D image processor based on a high-speed computing chip such as a CPU, an FPGA, an ASIC or the like. Optionally, the displacement sensor 720 may be presented in the form of a chip, a single chip microcomputer or the like.

In some embodiments, the above at least two color cameras may use optical lenses and sensor chips with the same performance indexes.

In some embodiments, the above at least two black-and-white cameras may use optical lenses and sensor chips with the same performance indexes.

Referring to Fig. 29A, in some embodiments, the above at least two color cameras may comprise two color cameras: a first color camera 7111 and a second color camera 7112, which may be arranged at the upper part of the 3D display terminal. Optionally, some or all of the above at least two color cameras may also be arranged at positions other than the upper part of the 3D display terminal, such as the lower part, the left part, the right part or the like of the 3D display terminal, as long as the color cameras can operate normally.

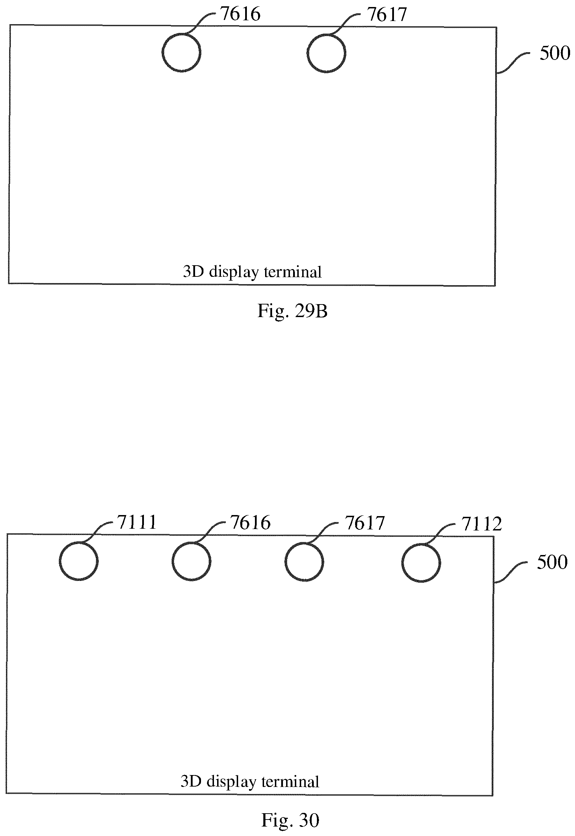

Referring to Fig. 29B, in some embodiments, the above at least two black-and-white cameras may comprise two black-and-white cameras: a first black-and-white camera 7616 and a second black-and-white camera 7617, which may be arranged at the upper part of the 3D display terminal. Optionally, some or all of the above at least two black-and-white cameras may also be arranged at positions other than the upper part of the 3D display terminal, such as the lower part, the left part, the right part or the like of the 3D display terminal, as long as the black-and-white cameras may operate normally.

In some embodiments, spacing between the two black-and-white cameras may be set with reference to the interpupillary distance. Optionally, the distance between the first black-and-white camera 7616 and the second black-and-white camera 7617 may be set within a common interpupillary distance range, for example, the spacing is greater than or equal to 5.5 mm and less than or equal to 6.5 mm, and the common interpupillary distance values such as 6.1 mm or 6.2 mm are also optional. Optionally, the distance between the first black-and-white camera 7616 and the second black-and-white camera 7617 may also be set to be less than or equal to 5.5 mm or greater than or equal to 6.5 mm according to the actual situations, the preset strategies or other operating manners. No matter how the spacing between the two black-and-white cameras is set, as long as the black-and-white cameras can operate normally.

Referring to Fig. 30, in some embodiments, the above at least two color cameras and the above at least two black-and-white cameras may be arranged in the same direction. Optionally, the first color camera 7111, the second color camera 7112, the first black-and-white camera 7616 and the second black-and-white camera 7617 may be arranged on the same side of the 3D display terminal, such as a side facing the user or a side facing away from the user.

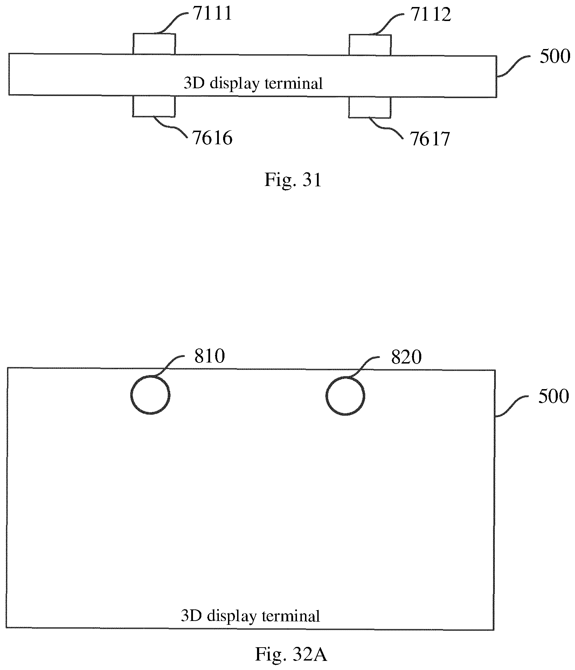

Referring to Fig. 31, in some embodiments, the above at least two color cameras and the above at least two black-and-white cameras may be arranged in different directions. Optionally, the first color camera 7111 and the second color camera 7112 may be arranged on a different side of the 3D display terminal from the first black-and-white camera 7616 and the second black-and-white camera 7617, for example, the first color camera 7111 and the second color camera 7112 are arranged on the side of the 3D display terminal facing the user, and the first black-and-white camera 7616 and the second black-and-white camera 7617 are arranged on the side of the 3D display terminal facing away from the user; alternatively, the first color camera 7111 and the second color camera 7112 are arranged on the side of the 3D display terminal facing away from the user, and the first black-and-white camera 7616 and the second black-and-white camera 7617 are arranged on the side of the 3D display terminal facing the user.

In some embodiments, the above at least two color cameras may be arranged on the same horizontal line, and the above at least two black-and-white cameras may be arranged on the same horizontal line; or, the above at least two color cameras and the above at least two black-and-white cameras may be arranged on the same horizontal line. Optionally, when the 3D display terminal is placed horizontally or vertically, the first black-and-white camera 7616 and the second black-and-white camera 7617 may be arranged on the same horizontal line. Optionally, when the 3D display terminal is placed horizontally or vertically, the first color camera 7111 and the second color camera 7112 may be arranged on the same horizontal line.

Referring to Fig. 32A, in some embodiments, the apparatus 700 for realizing 3D display may further comprise: at least two loudspeakers.

In some embodiments, the above at least two loudspeakers may comprise two loudspeakers: a first loudspeaker 810 and a second loudspeaker 820, both of which may be arranged at the upper part of the 3D display terminal. Optionally, some or all of the above at least two loudspeakers may also be arranged at positions other than the upper part of the 3D display terminal, such as the lower part, the left part, the right part or the like of the 3D display terminal, as long as the loudspeakers can operate normally.

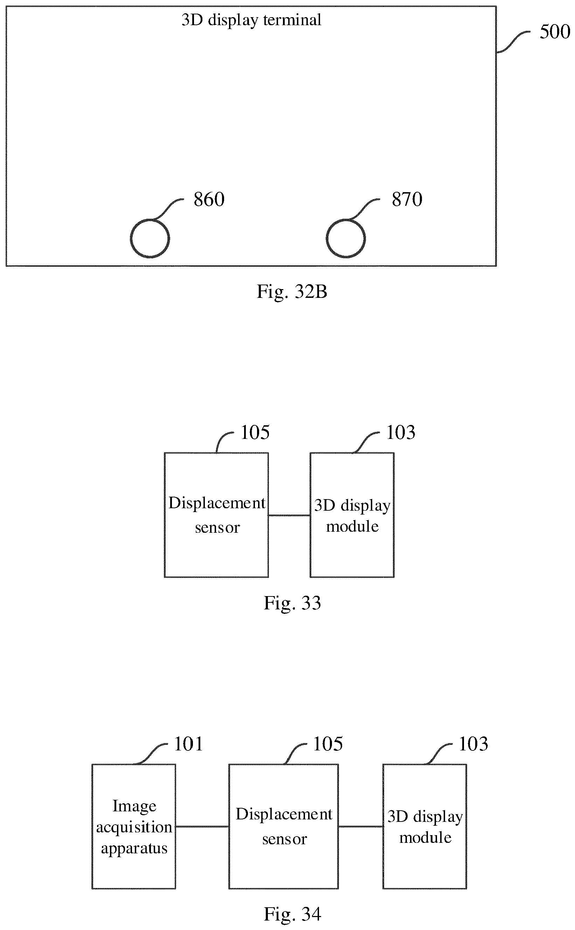

Referring to Fig. 32B, in some embodiments, the apparatus 700 for realizing 3D display may further comprise: at least two microphones.

In some embodiments, the above at least two microphones may comprise two microphones: a first microphone 860 and a second microphone 870, both of which may be arranged at the lower part of the 3D display terminal. Optionally, some or all of the above at least two microphones may also be arranged at positions other than the lower part of the 3D display terminal, such as the lower part, the left part, the right part or the like of the 3D display terminal, as long as the microphones can operate normally.

In some embodiments, the spacing between the two loudspeakers may be set with reference to the distance between two ears. Optionally, the spacing between the first loudspeaker 810 and the second loudspeaker 820 may be set within a common range of the distance between the two ears, for example, the spacing is greater than or equal to 10 cm and less than or equal to 15 cm, and may also be 11 cm, 12 cm, 13 cm and the like within the range. Optionally, the spacing between the first loudspeaker 810 and the second loudspeaker 820 may also be set to be less than or equal to 10 cm or greater than or equal to 15 cm according to the actual situations, the preset strategies and other operating manners. No matter how the spacing between the two loudspeakers is set, as long as the loudspeakers can operate normally.

In some embodiments, the spacing between the two microphones may also be reasonably set, to support an excellent acoustic effect. For example, the spacing between the two microphones may be set according to the actual situations, the preset strategies or other operating manners, so that stereo sound may be realized by the acoustic effect of the two microphones.

In some embodiments, the above at least two loudspeakers may be arranged on the same horizontal line.

In some embodiments, the above at least two microphones may be arranged on the same horizontal line.

Optionally, when the 3D display terminal is placed horizontally or vertically, the first loudspeaker 810 and the second loudspeaker 820 may be arranged on the same horizontal line. Optionally, when the 3D display terminal is placed horizontally or vertically, the first microphone 860 and the second microphone 870 may be arranged on the same horizontal line.

Referring to Fig. 33, embodiments of the present disclosure provide an apparatus 100 for realizing 3D display, comprising:
a displacement sensor 105, which operates independently relative to a main control chip of the 3D display terminal and is configured to acquire eye positions of the user and transmit the eye positions of the user to a 3D display module 103 operating independently relative to the main control chip; and
the 3D display module 103, which is configured to generate 3D display content according to a to-be-displayed image and the eye positions of the user.

In some embodiments, the displacement sensor 105 may be arranged at a position other than the main control chip and configured to be controlled by a device other than the main control chip.

Optionally, the displacement sensor 105 may be arranged inside the body of the 3D display terminal. Optionally, the displacement sensor 105 is arranged at the body of the 3D display terminal and located inside the body.

In some embodiments, the displacement sensor 105 may be arranged at the main control chip and configured to be controlled by a device other than the main control chip.

In some embodiments, the displacement sensor 105 may be controlled by a device other than the main control chip, whether the displacement sensor 105 is arranged at the main control chip or at a position other than the main control chip.

In some embodiments, the displacement sensor 105 may also be controlled by a 3D display screen 108 or other devices of the 3D display terminal according to actual application scenarios, preset strategies and the like.

In some embodiments, the displacement sensor 105 may be configured to be triggered or started by a device other than the main control chip.

Referring to Fig. 34, in some embodiments, the apparatus 100 for realizing 3D display may further comprise an image acquisition apparatus 400, which is configured to acquire images of a shooting object comprising the eye positions of the user.

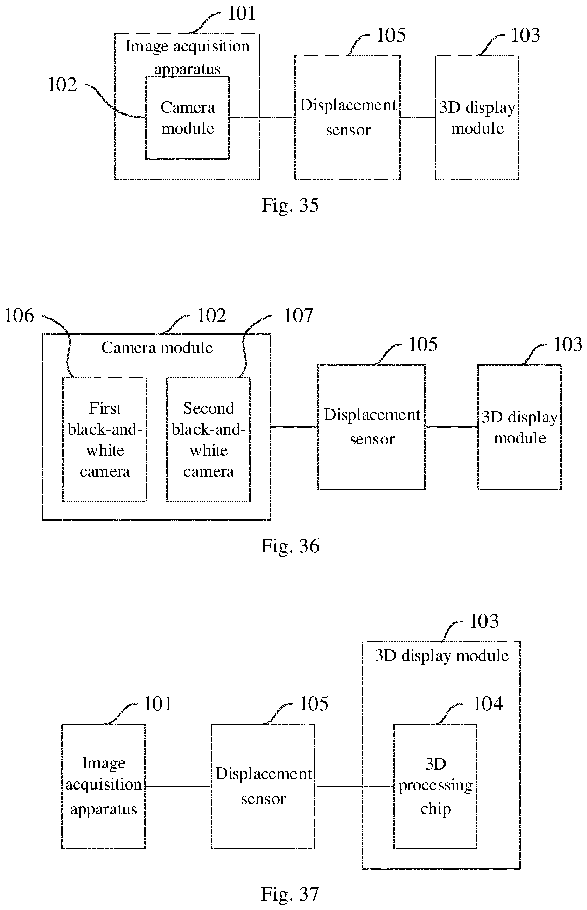

Referring to Fig. 35, in some embodiments, the image acquisition apparatus 101 may comprise a camera module 102, which is configured to acquire the images of the shooting object.

Referring to Fig. 36, in some embodiments, the camera module 102 may comprise at least two cameras, which are configured to acquire the images of the shooting object. Optionally, the at least two cameras may comprise at least two black-and-white cameras: a first black-and-white camera 106 and a second black-and-white camera 107, which are respectively configured to acquire black-and-white images of the shooting object.

In some embodiments, the above at least two black-and-white cameras may use optical lenses and sensor chips with the same performance indexes.

In some embodiments, the displacement sensor 105 may be controlled by the above at least two black-and-white cameras or the camera module 102 containing the above at least two black-and-white cameras.

Optionally, the displacement sensor 105 may be triggered or started by the above at least two black-and-white cameras, the camera module 102 or the 3D display screen 108 or other devices. The displacement sensor 105 may be triggered or started in various manners, for example, the displacement sensor 105 is triggered or started in a manner of electric pulses, digital signals or the like.

In some embodiments, the at least two black-and-white cameras, the camera module 102 or the 3D display screen 108 may transmit the electric pulses, the digital signals and the like to the displacement sensor 105; and the displacement sensor 105 is triggered or started after the electric pulses and the digital signals are received.

In some embodiments, the displacement sensor 105 may be configured to:
acquire eye coordinates of eyes of the user by obtaining eye depth information according to eye plane position information contained in the images of the shooting object.

Optionally, the eye coordinates of eyes of the user may be space coordinates of eyes of the user.

In some embodiments, the black-and-white images obtained by the black-and-white cameras contain the eye plane position information. Optionally, the eye plane position information contained in a black-and-white image obtained by compositing at least two corresponding black-and-white images acquired by at least two black-and-white cameras with different shooting angles by means of the displacement sensor 105 contains eye depth information, so that the eye depth information may be obtained according to the eye plane position information contained in the black-and-white image, and the eye depth information may be converted into the eye coordinates of eyes of the user.

In some embodiments, the 3D display module 103 may be arranged at a position other than the main control chip and configured to be controlled by a device other than the main control chip.

Optionally, the 3D display module 103 may be arranged inside the body of the 3D display terminal. Optionally, the 3D display module 103 is arranged at the body of the 3D display terminal and located inside the body.

In some embodiments, the 3D display module 103 may be arranged at the main control chip and configured to be controlled by a device other than the main control chip.

In some embodiments, the 3D display module 103 may be controlled by a device other than the main control chip, whether the 3D display module 103 is arranged at the main control chip or at a position other than the main control chip. Optionally, the 3D display module 103 may be controlled by the above at least two black-and-white cameras or the camera module 102 containing the above at least two black-and-white cameras.

In some embodiments, the 3D display module 103 may also be controlled by the 3D display screen 108 or other devices of the 3D display terminal according to actual application scenarios, preset strategies and the like.

In some embodiments, the 3D display module 103 may be configured to be triggered or started by a device other than the main control chip.

Optionally, the 3D display module 103 may be triggered or started by the above at least two black-and-white cameras, the camera module 102 or the 3D display screen 108 or other devices. The 3D display module 103 may be triggered or started in various manners, for example, the displacement sensor 103 is triggered or started in a manner of electric pulses, digital signals or the like.

In some embodiments, the above at least two black-and-white cameras, the camera module 102 or the 3D display screen 108 may transmit the electric pulses, the digital signals and the like to the 3D display module 103, and the 3D display module 103 is triggered or started after the electric pulses and the digital signals are received.

In some embodiments, the camera module 102 may also comprise at least one color camera. Optionally, the camera module 102 may also comprise at least one TOF camera. Whether the camera module 102 comprises the black-and-white camera, the color camera or the TOF camera, at least two cameras contained in the camera module 102 may be applied to acquire the images of the shooting object comprising the eye positions of the user.

In some embodiments, the 3D display module 103 may be configured to:
render the to-be-displayed image into a left-eye image and a right-eye image, and perform pixel distribution of the left-eye image and the right-eye image according to the eye positions.

In some embodiments, the 3D display module 103 may be configured to:
distribute the left-eye image and the right-eye image to the pixels, corresponding to the eye positions, of the 3D display screen 108 of the 3D display terminal.

In some embodiments, the 3D display module 103 may be configured to: select a viewpoint matched with the eye positions from a plurality of viewpoints of the 3D display terminal, render the to-be-displayed image into a left-eye image and a right-eye image matched with the angle of the viewpoint, and distribute the left-eye image and the right-eye image to corresponding pixels of the 3D display screen 108 of the 3D display terminal according to the angle of the viewpoint, to support the 3D display.

Optionally, the eye positions may be the eye coordinates.

Referring to Fig. 37, in some embodiments, the 3D display module 103 may comprise a 3D processing chip 104, which is configured to: generate 3D display content according to the to-be-displayed image and the eye positions of the user.

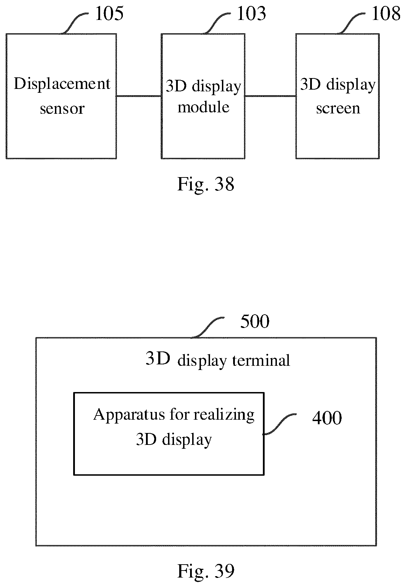

Referring to Fig. 38, in some embodiments, the apparatus 100 for realizing 3D display may further comprise:
the 3D display screen 108, which is configured to display the 3D display content.

Optionally, the 3D display screen 108 may be connected with the 3D display module 103, to receive the to-be-displayed image for realizing the 3D display. Optionally, the 3D display screen 108 may also be connected with the displacement sensor 105, to receive the eye positions of the user acquired by the displacement sensor 105, to support the 3D display.

In some embodiments, the displacement sensor 105 may be a 3D image processor based on a high-speed computing chip such as a CPU, an FPGA, an ASIC or the like. Optionally, the displacement sensor 105 may be presented in the form of a chip, a single chip microcomputer or the like.

Referring to Fig. 39, embodiments of the present disclosure provide a 3D display terminal 500, which comprises one of the apparatus 400 for realizing 3D display, the apparatus 700 for realizing 3D display and the apparatus 100 for realizing 3D display. As shown in Fig. 39, a case where the 3D display terminal 500 comprises the apparatus 400 for realizing 3D display is exemplified. Optionally, the 3D display terminal 500 may comprise the apparatus 700 for realizing 3D display. Optionally, the 3D display terminal 500 may comprise the apparatus 100 for realizing 3D display.

In some embodiments, the 3D display terminal 500 may further comprise components for supporting the normal operation of the 3D display terminal 500, such as at least one of a backlight module, a light guide plate, a polarizer, a glass substrate, a liquid crystal layer, an optical filter and other components.

In some embodiments, the 3D display terminal 500 may be arranged in a 3D display device. Optionally, the 3D display device may also comprise components for supporting the normal operation of the 3D display device, such as at least one of a backlight module, a mainboard, a backplane and other components.

According to the method and the apparatus for realizing 3D display and the 3D display terminal provided by embodiments of the present disclosure, the displacement sensor that operates independently relative to the main control chip of the 3D display terminal is used to directly process the acquired image having the eye space information of the user, instead of processing the image by means of the main control chip of the 3D display terminal, so as to avoid occupancy of a large amount of resources of the main control chip caused by processing the image having the eye space information of the user, so that and dependence on the main control chip is reduced, and the timeliness of image processing is improved.

According to the method and the apparatus for realizing 3D display and the 3D display terminal provided by embodiments of the present disclosure, the displacement sensor that operates independently relative to the main control chip of the 3D display terminal is used to directly position the eyes of the user, instead of positioning the eyes of the user by means of the main control chip of the 3D display terminal, so as to avoid occupancy of a large amount of resources of the main control chip caused by positioning the eyes of the user, so that and dependence on the main control chip is reduced, and the timeliness of image processing is improved.

In some embodiments, the method and the apparatus for realizing 3D display and the 3D display terminal provided by the embodiments of the present disclosure can support the DOF camera to adjust the DOF of the color images, and can effectively improve the accuracy of the DOF of the color images.

According to the method and the apparatus for realizing 3D display and the 3D display terminal provided by embodiments of the present disclosure, the displacement sensor that operates independently relative to the main control chip of the 3D display terminal is used to directly acquire eye positions of the user, instead of acquiring the eye positions of the user by means of the main control chip of the 3D display terminal, so as to avoid occupancy of a large amount of resources of the main control chip caused by acquiring the eye positions of the user, so that and dependence on the main control chip is reduced, and the timeliness of image processing is improved.

Embodiments of the present disclosure further provide a computer-readable storage medium storing computer-executable instructions, and the computer-executable instructions are configured to perform the method for realizing 3D display.

Embodiments of the present disclosure provide a computer program product, which comprises a computer program stored on a computer-readable storage medium; the computer program comprises program instructions; and when the program instructions are performed by a computer, the computer will perform the method for realizing 3D display.

The computer-readable storage medium may be a transient computer-readable storage medium or a non-transient computer-readable storage medium.

According to the products of the computer-readable storage medium and the computer program provided by embodiments of the present disclosure, the displacement sensor that operates independently relative to the main control chip of the 3D display terminal is used to directly process the acquired image having the eye space information of the user, instead of processing the image by means of the main control chip of the 3D display terminal, so as to avoid occupancy of a large amount of resources of the main control chip caused by processing the image having the eye space information of the user, so that and dependence on the main control chip is reduced, and the timeliness of image processing is improved.

According to the products of the computer-readable storage medium and the computer program provided by embodiments of the present disclosure, the displacement sensor that operates independently relative to the main control chip of the 3D display terminal is used to directly position the eyes of the user, instead of positioning the eyes of the user by means of the main control chip of the 3D display terminal, so as to avoid occupancy of a large amount of resources of the main control chip caused by positioning the eyes of the user, so that and dependence on the main control chip is reduced, and the timeliness of image processing is improved.

In some embodiments, the products of the computer-readable storage medium and the computer program provided by embodiments of the present disclosure can support the DOF camera to adjust the DOF of the color images, and can effectively improve the accuracy of the DOF of the color images.

In some embodiments, the 3D technology may comprise auto-stereoscopy, i.e.: the method and the apparatus for realizing 3D display and the 3D display terminal may realize functions related to auto-stereoscopy, such as shooting and displaying of auto-stereoscopy images.

According to the products of the computer-readable storage medium and the computer program provided by embodiments of the present disclosure, the displacement sensor that operates independently relative to the main control chip of the 3D display terminal is used to directly acquire eye positions of the user, instead of acquiring the eye positions of the user by means of the main control chip of the 3D display terminal, so as to avoid occupancy of a large amount of resources of the main control chip caused by acquiring the eye positions of the user, so that and dependence on the main control chip is reduced, and the timeliness of image processing is improved.

Technical solutions of embodiments of the present disclosure may be reflected in the form of a software product, which is stored in a storage medium and comprises one or more instructions for enabling computer equipment (which may be a personal computer, a server, network equipment or the like) to perform all or some steps of the method in embodiments of the present disclosure. The storage medium may be a non-transient storage medium, comprising a plurality of media capable of storing program codes, such as a U disk, a mobile hard disk, a read-only memory (ROM), a random access memory (RAM), a diskette or an optical disk, and may also be a transient storage medium.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the specific working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flow charts and block diagrams in the drawings show architectures, functions and operations possibly implemented by systems, methods and computer program products according to the embodiments of the present disclosure. In this regard, each block in the flow charts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flow charts and the block diagrams in the drawings, operations or steps corresponding to different blocks may also occur in different orders than those disclosed, and sometimes there is no specific order between different operations or steps. For example, two continuous operations or steps may be actually performed substantially concurrently, or sometimes may be performed in the reverse order, depending on the functions involved. Each block in the block diagrams and/or flow charts, and combinations of the blocks in the block diagrams and/or flow charts, can be implemented by special hardware-based systems that perform specified functions or actions, or implemented by combinations of special hardware and computer instructions.

## Claims

1. A method for realizing 3D display, comprising:
acquiring an image having eye space information of a user;
acquiring eye positions of the user according to the image having the eye space information of the user and by means of a displacement sensor that operates independently relative to a main control chip of a 3D display terminal; and
generating 3D display content according to a to-be-displayed image and the eye positions of the user.

2. The method according to claim 1, wherein acquiring eye positions of the user according to the image having the eye space information of the user and by means of a displacement sensor comprises:
acquiring the eye positions of the user according to the image having the eye space information of the user and by means of the displacement sensor that is arranged at a position other than the main control chip and controlled by a device other than the main control chip.

3. The method according to claim 2, wherein acquiring eye positions of the user according to the image having the eye space information of the user and by means of a displacement sensor comprises:
acquiring the eye positions of the user according to the image having the eye space information of the user and by means of the displacement sensor that is triggered or started by a device other than the main control chip.

4. The method according to any one of claims 1-3, wherein acquiring eye positions of the user according to the image having the eye space information of the user comprises:
acquiring space coordinates of eyes of the user by obtaining eye depth information according to eye plane position information contained in the image having the eye space information of the user.

5. The method according to claim 4, wherein generating 3D display content according to a to-be-displayed image and the eye positions of the user comprises:
rendering the to-be-displayed image into a left-eye image and a right-eye image; and
performing pixel distribution of the left-eye image and the right-eye image on a 3D display screen of the 3D display terminal according to eye coordinates.

6. The method according to claim 5, wherein performing pixel distribution of the left-eye image and the right-eye image on a 3D display screen according to eye coordinates comprises:
distributing the left-eye image and the right-eye image to the pixels, corresponding to the eye coordinates, of the 3D display screen.

7. The method according to any one of claims 1-6, wherein acquiring an image having eye space information of a user comprises:
acquiring the image having eye space information of the user by a camera module.

8. The method according to claim 7, wherein acquiring the image having eye space information of the user by a camera module comprises:
acquiring black-and-white images of a shooting object by at least two black-and-white cameras.

9. The method according to claim 1, further comprising: displaying the 3D display content through the 3D display screen of the 3D display terminal.

10. A method for realizing 3D display, comprising:
acquiring images in a 3D shooting manner; performing eye positioning for a user with a displacement sensor that operates independently relative to a main control chip of a 3D display terminal;
generating 3D display content according to the images acquired in the 3D shooting manner and results of the eye positioning.

11. The method according to claim 10, wherein
acquiring images in a 3D shooting manner comprises: acquiring color images containing parallax by at least two color cameras;
and/or,
performing eye positioning for a user with a displacement sensor comprises: acquiring eye positions of the user by means of the displacement sensor.

12. The method according to claim 11, further comprising:
acquiring first depth-of-field (DOF) information of a first shooting object by a DOF camera; and
adjusting second DOF information in the color image according to the first DOF information;
wherein the color image is a color image of the first shooting object that can be adjusted according to the first DOF information.

13. The method according to claim 12, wherein adjusting second DOF information in the color image according to the first DOF information comprises:
adjusting depths of field (DOFs) of corresponding pixels contained in the second DOF information based on the DOFs of the pixels contained in the first DOF information, so that the DOFs of corresponding pixels contained in the second DOF information approaches the DOFs of the pixels contained in the first DOF information.

14. The method according to claim 13, wherein adjusting the DOFs of corresponding pixels contained in the second DOF information based on the DOFs of the pixels contained in the first DOF information comprises:
adjusting the DOFs of corresponding pixels contained in the second DOF information to the DOFs of the pixels contained in the first DOF information in proportion; or,
adjusting the DOFs of corresponding pixels contained in the second DOF information as the DOFs of the pixels contained in the first DOF information.

15. The method according to claim 13 or 14, further comprising: adjusting the DOFs of pixels, other than corresponding pixels, contained in the second DOF information based on the DOFs of pixels contained in the first DOF information.

16. The method according to claim 15, wherein adjusting the DOFs of pixels, other than corresponding pixels, contained in the second DOF information based on the DOFs of pixels contained in the first DOF information comprises:
adjusting the DOFs of pixels, other than corresponding pixels, contained in the second DOF information to the DOFs of pixels contained in the first DOF information in proportion in a preset region; or,
adjusting the DOFs of pixels, other than corresponding pixels, contained in the second DOF information as the DOFs of pixels contained in the first DOF information in the preset region.

17. The method according to claim 12, wherein acquiring first DOF information of a first shooting object by a DOF camera comprises:
acquiring the first DOF information of the first shooting object by a structured light camera or a time of flight (TOF) camera.

18. The method according to claim 12, wherein acquiring color images of the first shooting object by at least two color cameras comprises:
acquiring a first color image by a first color camera, and acquiring a second color image by a second color camera; and
compositing the first color image and the second color image into a color compositing image containing the second DOF information according to spacing and shooting angles between the first color camera and the second color camera.

19. The method according to claim 18, wherein the color compositing image comprises a left half image and a right half image;
wherein the left half image is a color image, and the right half image is a DOF image.

20. The method according to any one of claims 10-19, wherein performing eye positioning for a user with a displacement sensor comprises:
acquiring eye positions of the user by means of the displacement sensor arranged at a position other than the main control chip and controlled by a device other than the main control chip.

21. The method according to claim 20, wherein acquiring eye positions of the user by means of the displacement sensor comprises:
acquiring eye positions of the user by means of the displacement sensor triggered or started by a device other than the main control chip.

22. The method according to claim 20, further comprising: acquiring images of a second shooting object comprising eye positions of the user.

23. The method according to claim 22, wherein acquiring images of the second shooting object comprises:
acquiring the images of the second shooting object by an image acquisition camera module.

24. The method according to claim 23, wherein acquiring the images of the second shooting object by an image acquisition camera module comprises:
acquiring the images of the second shooting object by at least two image acquisition cameras.

25. The method according to claim 24, wherein acquiring the images of the second shooting object by at least two image acquisition cameras comprises:
acquiring black-and-white images of the second shooting object by at least two black-and-white cameras.

26. The method according to claim 22, wherein acquiring eye positions of the user comprises:
acquiring eye coordinates of eyes of the user by obtaining eye depth information according to eye plane position information contained in the images of the second shooting object.

27. The method according to claim 20, further comprising: transmitting the eye positions of the user to a 3D display module that operates independently relative to the main control chip; and generating 3D display content by the 3D display module according to images acquired in a 3D shooting manner and the eye positions of the user.

28. The method according to claim 27, wherein generating 3D display content by the 3D display module comprises:
generating the 3D display content by the 3D display module that is arranged at a position other than the main control chip and controlled by a device other than the main control chip according to the images acquired in the 3D shooting manner and the eye positions.

29. The method according to claim 27, wherein generating 3D display content by the 3D display module comprises:
generating the 3D display content by the 3D display module triggered or started by a device other than the main control chip according to the images acquired in the 3D shooting manner and the eye positions.

30. The method according to claim 29, wherein generating 3D display content by the 3D display module comprises:
rendering the images acquired in the 3D shooting manner into a left-eye image and a right-eye image by the 3D display module, and performing pixel distribution of the left-eye image and the right-eye image according to eye coordinates.

31. The method according to claim 30, wherein performing pixel distribution of the left-eye image and the right-eye image according to eye coordinates comprises:
distributing the left-eye image and the right-eye image to the pixels, corresponding to the eye coordinates, of the 3D display screen of the 3D display terminal.

32. The method according to claim 10, further comprising: displaying the 3D display content through the 3D display screen of the 3D display terminal.

33. A method for realizing 3D display, comprising:
acquiring the eye positions of the user by means of the displacement sensor that operates independently relative to the main control chip of the 3D display terminal, and transmitting the eye positions of the user to the 3D display module that operates independently relative to the main control chip; and
generating the 3D display content according to the to-be-displayed image and the eye positions of the user by the 3D display module.

34. The method according to claim 33, wherein acquiring the eye positions of the user by means of the displacement sensor comprises:
acquiring the eye positions of the user by means of the displacement sensor arranged at a position other than the main control chip and controlled by a device other than the main control chip.

35. The method according to claim 34, wherein acquiring the eye positions of the user by means of the displacement sensor comprises:
acquiring the eye positions of the user by means of the displacement sensor triggered or started by a device other than the main control chip.

36. The method according to any one of claims 33-35, further comprising: acquiring images of a shooting object comprising the eye positions of the user.

37. The method according to claim 36, wherein acquiring images of a shooting object comprises:
acquiring the images of the shooting object by a camera module.

38. The method according to claim 37, wherein acquiring the images of the shooting object by a camera module comprises:
acquiring the images of the shooting object by at least two cameras.

39. The method according to claim 38, wherein acquiring the images of the shooting object by at least two cameras comprises:
acquiring black-and-white images of the shooting object by at least two black-and-white cameras.

40. The method according to claim 36, wherein acquiring eye positions of the user comprises:
acquiring eye coordinates of eyes of the user by obtaining eye depth information according to eye plane position information contained in the images of the shooting object.

41. The method according to any one of claims 33-40, wherein generating the 3D display content according to the to-be-displayed image and the eye positions by the 3D display module comprises:
generating the 3D display content according to the to-be-displayed image and the eye positions by the 3D display module that is arranged at a position other than the main control chip and controlled by a device other than the main control chip.

42. The method according to claim 41, wherein generating the 3D display content according to the to-be-displayed image and the eye positions by the 3D display module comprises:
generating the 3D display content according to the to-be-displayed image and the eye positions by the 3D display module triggered or started by a device other than the main control chip.

43. The method according to claim 42, wherein generating the 3D display content according to the to-be-displayed image and the eye positions by the 3D display module comprises:
rendering the to-be-displayed image into a left-eye image and a right-eye image by the 3D display module, and performing pixel distribution of the left-eye image and the right-eye image according to the eye positions.

44. The method according to claim 43, wherein performing pixel distribution of the left-eye image and the right-eye image according to the eye positions comprises:
distributing the left-eye image and the right-eye image to the pixels, corresponding to the eye positions, of the 3D display screen of the 3D display terminal.

45. The method according to claim 33, further comprising: displaying the 3D display content through the 3D display screen of the 3D display terminal.

46. An apparatus for realizing 3D display, comprising a processor and a memory storing program instructions, wherein the processor is configured to perform the method of any one of claims 1-45 when the program instructions are performed.

47. An apparatus for realizing 3D display, comprising:
an image acquisition apparatus, which is configured to acquire an image having eye space information of a user;
a displacement sensor, which operates independently relative to a main control chip of a 3D display terminal and is configured to acquire eye positions of the user according to the image having the eye space information of the user; and
a 3D image processor, which is configured to determine 3D display content according to the eye positions of the user.

48. The apparatus according to claim 47, wherein
the displacement sensor is arranged at a position other than the main control chip and configured to be controlled by a device other than the main control chip.

49. The apparatus according to claim 48, wherein the displacement sensor is configured to be triggered or started by a device other than the main control chip.

50. The apparatus according to any one of claims 47-49, wherein the displacement sensor is configured to:
acquire space coordinates of eyes of the user by obtaining eye depth information according to eye plane position information contained in the image having the eye space information of the user.

51. The apparatus according to claim 50, wherein the 3D image processor is configured to:
render the to-be-displayed image into a left-eye image and a right-eye image; and
perform pixel distribution of the left-eye image and the right-eye image on the 3D display screen of the 3D display terminal according to eye coordinates.

52. The apparatus according to claim 51, wherein the 3D image processor is configured to:
distribute the left-eye image and the right-eye image to the pixels, corresponding to the eye coordinates, of the 3D display screen.

53. The apparatus according to any one of claims 47-52, wherein the image acquisition apparatus comprises a camera module, which is configured to acquire the image having eye space information of the user.

54. The apparatus according to claim 53, wherein the camera module comprises at least two black-and-white cameras, which are configured to acquire black-and-white images having the eye space information of the user.

55. The apparatus according to claim 54, wherein the at least two black-and-white cameras use optical lenses and sensor chips with the same performance indexes.

56. The apparatus according to claim 53, wherein the image acquisition apparatus further comprises an illumination component, which is configured to provide illumination when acquiring images.

57. The apparatus according to claim 56, wherein the illumination component comprises at least one of:
a visible-light lamp and an infrared lamp.

58. The apparatus according to claim 47, further comprising:
a 3D display screen, which is configured to display the 3D display content.

59. An apparatus for realizing 3D display, comprising:
a 3D shooting apparatus, which is configured to acquire images in a 3D shooting manner;
a displacement sensor, which operates independently relative to a main control chip of the 3D display terminal and is configured to position the eyes of the user; and
a 3D display module, which is configured to generate 3D display content according to the images acquired in the 3D shooting manner and the results of eye positioning.

60. The apparatus according to claim 59, wherein
the 3D shooting apparatus comprises a color camera module, which is provided with at least two color cameras and is configured to acquire color images containing parallax;
and/or,
the displacement sensor, which is configured to acquire eye positions of the user.

61. The apparatus according to claim 60, further comprising:
a DOF camera, which is configured to acquire first DOF information of a first shooting object; and
an image processor, which is configured to adjust second DOF information in the color image according to the first DOF information;
wherein the color image is a color image of the first shooting object that can be adjusted according to the first DOF information.

62. The apparatus according to claim 61, wherein the image processor is configured to:
adjust the DOFs of corresponding pixels contained in the second DOF information based on the DOFs of the pixels contained in the first DOF information, so that the DOFs of corresponding pixels contained in the second DOF information approaches the DOFs of the pixels contained in the first DOF information.

63. The apparatus according to claim 62, wherein the image processor is configured to:
adjust the DOFs of corresponding pixels contained in the second DOF information to the DOFs of the pixels contained in the first DOF information in proportion; or
adjust the DOFs of corresponding pixels contained in the second DOF information as the DOFs of the pixels contained in the first DOF information.

64. The apparatus according to claim 62 or 63, wherein the image processor is further configured to: adjust the DOFs of pixels, other than corresponding pixels, contained in the second DOF information based on the DOFs of pixels contained in the first DOF information.

65. The apparatus according to claim 64, wherein the image processor is configured to:
adjust the DOFs of pixels, other than corresponding pixels, contained in the second DOF information to the DOFs of pixels contained in the first DOF information in proportion in a preset region; or
adjust the DOFs of pixels, other than corresponding pixels, contained in the second DOF information as the DOFs of pixels contained in the first DOF information in the preset region.

66. The apparatus according to claim 61, wherein
the DOF camera is configured to: acquire the first DOF information of a first shooting object containing the DOFs of the pixels;
wherein the DOF camera is: a structured light camera or a TOF camera.

67. The apparatus according to claim 61, wherein
the color camera module comprises:
a first color camera, which is configured to acquire a first color image;
a second color camera, which is configured to acquire a second color image; and
an image processor, which is configured to:
composite the first color image and the second color image into a color compositing image containing the second DOF information according to spacing and shooting angles between the first color camera and the second color camera.

68. The apparatus according to claim 67, wherein the color compositing image comprises a left half image and a right half image;
wherein the left half image is a color image, and the right half image is a DOF image.

69. The apparatus according to claim 66, wherein the DOF camera is a TOF camera, which is located between the first color camera and the second color camera.

70. The apparatus according to any one of claims 60-69, wherein
the displacement sensor is arranged at a position other than the main control chip and configured to be controlled by a device other than the main control chip.

71. The apparatus according to claim 70, wherein the displacement sensor is configured to be triggered or started by a device other than the main control chip.

72. The apparatus according to claim 70, further comprising: an image acquisition apparatus, which is configured to acquire images of a second shooting object comprising eye positions of the user.

73. The apparatus according to claim 72, wherein the image acquisition apparatus comprises:
an image acquisition camera module, which is configured to acquire the images of the second shooting object.

74. The apparatus according to claim 73, wherein the image acquisition camera module comprises:
at least two image acquisition cameras, which are configured to acquire the images of the second shooting object.

75. The apparatus according to claim 74, wherein the at least two image acquisition cameras comprise:
at least two black-and-white cameras, which are configured to acquire black-and-white images of the second shooting object.

76. The apparatus according to claim 72, wherein the displacement sensor is configured to:
acquire eye coordinates of eyes of the user by obtaining eye depth information according to eye plane position information contained in the images of the second shooting object.

77. The apparatus according to claim 70, wherein
the 3D display module operates independently relative to the main control chip and is configured to generate 3D display content according to images acquired in a 3D shooting manner and the eye positions of the user.

78. The apparatus according to claim 77, wherein
the 3D display module is arranged at a position other than the main control chip and configured to be controlled by a device other than the main control chip.

79. The apparatus according to claim 78, wherein
the 3D display module is configured to be triggered or started by a device other than the main control chip.

80. The apparatus according to claim 79, wherein the 3D display module is configured to:
render the images acquired in the 3D shooting manner into a left-eye image and a right-eye image, and perform pixel distribution of the left-eye image and the right-eye image according to eye coordinates.

81. The apparatus according to claim 80, wherein the 3D display module is configured to:
distribute the left-eye image and the right-eye image to the pixels, corresponding to the eye coordinates, of the 3D display screen of the 3D display terminal.

82. The apparatus according to claim 59, further comprising:
the 3D display screen, which is configured to display the 3D display content.

83. The apparatus according to claim 75, wherein
the at least two color cameras use optical lenses and sensor chips with the same performance indexes; and/or
the at least two black-and-white cameras use optical lenses and sensor chips with the same performance indexes.

84. The apparatus according to claim 75, wherein
the at least two color cameras comprise two color cameras arranged at the upper part of the 3D display terminal; and/or
the at least two black-and-white cameras comprise two black-and-white cameras arranged at the upper part of the 3D display terminal.

85. The apparatus according to claim 84, wherein spacing between the two black-and-white cameras is set with reference to an interpupillary distance.

86. The apparatus according to claim 84, wherein the at least two color cameras and the at least two black-and-white cameras are arranged in the same direction.

87. The apparatus according to claim 84, wherein the at least two color cameras and the at least two black-and-white cameras are arranged in different directions;
wherein the at least two black-and-white cameras are arranged to face a user, and the at least two color cameras are arranged to face away from the user.

88. The apparatus according to claim 84, wherein
the at least two color cameras are arranged on the same horizontal line, and the at least two black-and-white cameras are arranged on the same horizontal line; or,
the at least two color cameras and the at least two black-and-white cameras are arranged on the same horizontal line.

89. The apparatus according to claim 84, further comprising: at least two loudspeakers and at least two microphones.

90. The apparatus according to claim 89, wherein
the at least two loudspeakers comprise two loudspeakers, which are arranged at the upper part of the 3D display terminal; and/or,
the at least two microphones comprise two microphones, which are arranged at the lower part of the 3D display terminal.

91. The apparatus according to claim 90, wherein a distance between the two loudspeakers is set with reference to a distance between two ears.

92. The apparatus according to claim 91, wherein
the at least two loudspeakers are arranged on the same horizontal line; and/or,
the at least two microphones are arranged on the same horizontal line.

93. An apparatus for realizing 3D display, comprising:
a displacement sensor, which operates independently relative to a main control chip of the 3D display terminal and is configured to acquire eye positions of the user and transmit the eye positions of the user to a 3D display module operating independently relative to the main control chip; and
the 3D display module, which is configured to generate 3D display content according to a to-be-displayed image and the eye positions of the user.

94. The apparatus according to claim 93, wherein
the displacement sensor is arranged at a position other than the main control chip and configured to be controlled by a device other than the main control chip.

95. The apparatus according to claim 94, wherein the displacement sensor is configured to be triggered or started by a device other than the main control chip.

96. The apparatus according to any one of claims 93-95, further comprising: an image acquisition apparatus, which is configured to acquire images of the shooting object comprising the eye positions of the user.

97. The apparatus according to claim 96, wherein the image acquisition apparatus comprises:
a camera module, which is configured to acquire the images of the shooting object.

98. The apparatus according to claim 97, wherein the camera module comprises:
at least two cameras, which are configured to acquire the images of the shooting object.

99. The apparatus according to claim 98, wherein the at least two cameras comprise:
at least two black-and-white cameras, which are configured to acquire black-and-white images of the shooting object.

100. The apparatus according to claim 99, wherein the at least two black-and-white cameras use optical lenses and sensor chips with the same performance indexes.

101. The apparatus according to claim 96, wherein the displacement sensor is configured to:
acquire eye coordinates of eyes of the user by obtaining eye depth information according to eye plane position information contained in the images of the shooting object.

102. The apparatus according to any one of claims 93-101, wherein
the 3D display module is arranged at a position other than the main control chip and configured to be controlled by a device other than the main control chip.

103. The apparatus according to claim 102, wherein
the 3D display module is configured to be triggered or started by a device other than the main control chip.

104. The apparatus according to claim 103, wherein the 3D display module is configured to:
render the to-be-displayed image into a left-eye image and a right-eye image, and perform pixel distribution of the left-eye image and the right-eye image according to the eye positions.

105. The apparatus according to claim 104, wherein the 3D display module is configured to:
distribute the left-eye image and the right-eye image to the pixels, corresponding to the eye positions, of the 3D display screen of the 3D display terminal.

106. The apparatus according to claim 93, wherein the 3D display module comprises a 3D processing chip, which is configured to: generate 3D display content according to the to-be-displayed image and the eye positions of the user.

107. The apparatus according to claim 93, further comprising:
the 3D display screen, which is configured to display the 3D display content.

108. A 3D display terminal, comprising the apparatus of any one of claims 47-107.
